(19) Europäisches Patentamt
European Patent Office
Office européen des brevets

(11) EP 4 303 007 A1

(12) EUROPEAN PATENT APPLICATION
published in accordance with Art. 153(4) EPC

(43) Date of publication:
**10.01.2024 Bulletin 2024/02**

(21) Application number: **22763446.6**

(22) Date of filing: **04.03.2022**

(51) International Patent Classification (IPC):
***B41J 2/01*** (2006.01) ***C09D 11/54*** (2014.01)
***B41M 5/00*** (2006.01) ***D06P 5/00*** (2006.01)
***D06P 5/30*** (2006.01) ***D06P 3/52*** (2006.01)
***D06P 3/60*** (2006.01)

(52) Cooperative Patent Classification (CPC):
**B41J 2/01; B41M 5/00; C09D 11/54; D06P 3/52; D06P 3/60; D06P 5/00; D06P 5/30**

(86) International application number:
**PCT/JP2022/009567**

(87) International publication number:
**WO 2022/186396 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.03.2021 JP 2021033999**
**04.03.2021 JP 2021034000**
**04.03.2021 JP 2021034001**

(71) Applicant: **Nippon Kayaku Kabushiki Kaisha**
**Tokyo 102-8172 (JP)**

(72) Inventors:
- **TERANISHI, Makoto**
**Tokyo 115-8588 (JP)**
- **HIGUCHI, Hiroko**
**Tokyo 115-8588 (JP)**
- **ITO, Ryutaro**
**Tokyo 115-8588 (JP)**
- **KUROIWA, Hayato**
**Tokyo 115-8588 (JP)**

(74) Representative: **Murgitroyd & Company**
**Murgitroyd House**
**165-169 Scotland Street**
**Glasgow G5 8PL (GB)**

# (54) PRETREATMENT COMPOSITION, PRINT SET, AND TEXTILE PRINTING METHOD

(57) A pretreatment composition is used to form a wet precoat layer for receiving a water-based ink composition for forming an image on a fabric by an inkjet method, wherein [1] the water-based ink composition contains water, a pigment, a resin emulsion, a water-soluble organic solvent, and a surfactant, [2] the pretreatment composition is used to form the wet precoat layer in which an amount of the pretreatment composition applied per unit area is more than 0.035 g/cm$^2$ and less than 0.070 g/cm$^2$, [3] the pretreatment composition contains water, more than 1.4 mass% and less than 10.5 mass% of a cationic polymer with respect to a total mass of the pretreatment composition, and 0.1 mass% or more and less than 2.7 mass% of a crosslinking agent with respect to the total mass of the pretreatment composition, and [4] the cationic polymer contains at least one selected from the group consisting of an allylamine structural unit, a diallylamine structural unit, a diallylammonium structural unit, and an epihalohydrin structural unit.

EP 4 303 007 A1

## Description

TECHNICAL FIELD

The present disclosure relates to a pretreatment composition for inkjet textile printing, an inkjet textile printing method, a print set including a pretreatment composition, and a printed matter printed using a print set.

BACKGROUND

Hand drawing and screen printing have conventionally been dominant textile printing methods for fibers. Recently, however, textile printing methods for fibers using inkjet printers (inkjet textile printing) have been increasing.

Inkjet textile printing methods are more suitable for a large variety of printed matters in small quantities than analog printing methods such as screen printing and gravure printing, and it is desired to expand the range of application of inkjet textile printing methods for fabrics. With such expansion of the range of application, in garment printing and home textile printing, further improvement in density and fastness (e.g., rubbing fastness, washing fastness, light resistance) is required for various fabrics (e.g., cotton, polyester, nylon, and blends containing two or more types of fibers) and various types of cloth (e.g., knit, sheeting, broadcloth, oxford, chambray, mesh).

Colorants used in inkjet textile printing are, for example, water-soluble dyes. Such dyes have vivid hues and wide reproducible color gamuts. Water-soluble dyes also have the disadvantages that the light resistance is low and processes such as fixation after the dye is adhered to the fiber, water washing, treatment of dye waste liquid generated as a result of water washing or the like, etc. are complicated. Hence, the use of water-insoluble colorants instead of water-soluble dyes is attracting attention.

In inkjet textile printing using water-insoluble colorants, "bleeding" on fibers has been considered as a problem. To solve this problem, pretreatment on fibers has been proposed. For example, Patent Literature (PTL) 1 and PTL 2 listed below propose such treatment liquids.

Moreover, when one side of a polyester fiber (mesh cloth used for sportswear, etc.), thin fabric fiber, coarsely woven fiber, or the like is printed, "strike-through", i.e., the colorant permeating to the other side of the fiber not subjected to printing, may occur. This is one of the major problems causing density decrease.

Pretreatment on fibers has been proposed in order to prevent strike-through. However, if a high-concentration pretreatment liquid (hereafter also referred to as "pretreatment composition") or a large amount of pretreatment liquid is applied (adhered) to the fiber with too much emphasis on preventing strike-through, "traces" of applying the pretreatment liquid remain on the part of the fiber to which the pretreatment liquid has been applied, which is also problematic. For example, "traces" are observed as being whitish on a dark-colored fiber such as black, and observed as being dark in color as if wet with water on a light-colored fiber such as light blue. Such traces significantly impair the appearance of the textile printed matter, as a result of which the commercial value of the textile printed matter may be reduced or lost. There is thus a strong demand for a pretreatment liquid that leaves no "traces" while preventing strike-through.

If a color ink other than white is directly printed on a dark-colored fiber including black, the color of the color ink may not be visually recognizable. Accordingly, when printing a dark-colored fiber with a color ink, typically a white substrate is provided and this substrate is printed with the color ink. If the whiteness of the substrate is low, the color development of the image printed with the color ink decreases. For this reason, the whiteness and hiding property of the substrate are desirably high. It is known that the whiteness and hiding property decrease depending on the type of pretreatment liquid.

When a substrate is provided on a dark-colored fiber using white ink, the foregoing "strike-through" may occur depending on the type of fiber (cloth). This is a major problem causing a decrease in whiteness and hiding property.

Besides strike-through, unevenness may be observed on the white substrate as a result of the fiber of the pretreated part becoming fuzzy. Such unevenness also greatly lowers the quality of the textile printed matter. There is thus a strong demand for a pretreatment composition, a textile printing method, and a print set including a pretreatment composition and an ink composition that can solve these problems.

When printing a light-colored fiber including white with a color ink such as yellow, cyan, magenta, red, blue, violet, orange, or black, the color ink is often adhered directly to the fiber without providing a white substrate. Even in such cases, there is a strong demand for a pretreatment composition, a textile printing method, and a print set including a pretreatment composition and a color ink (ink composition) with which a color image with high color development can be obtained.

CITATION LIST

Patent Literature

PTL 1: JP H07-119047 A
PTL 2: JP 2000-226781 A

SUMMARY

(Technical Problem)

It could be helpful to provide a pretreatment composition, a print set including a pretreatment composition and an ink composition (and also including a color ink), and an inkjet textile printing method that suppress the foregoing traces, strike-through, and fuzzing and enable obtainment of an image with high whiteness and high hiding property when a color ink including white is used.

(Solution to Problem)

Upon careful examination, we discovered that the problems stated above can be solved by a pretreatment composition containing: a cationic polymer that contains a specific structural unit; and a crosslinking agent, and by an inkjet textile printing method including predetermined steps using a pretreatment composition containing a cationic polymer and a crosslinking agent and a water-based ink composition. The present disclosure is based on these discoveries.

We thus provide the following 1) to 39).

1) A pretreatment composition that is used to form a wet precoat layer for receiving a water-based ink composition for forming an image on a fabric by an inkjet method, and satisfies all of the following requirements [1] to [4]:

[1] the water-based ink composition contains water, a pigment, a resin emulsion, a water-soluble organic solvent, and a surfactant,
[2] the pretreatment composition is used to form the wet precoat layer in which an amount of the pretreatment composition applied per unit area is more than 0.035 $g/cm^2$ and less than 0.070 $g/cm^2$,
[3] the pretreatment composition contains water, more than 1.4 mass% and less than 10.5 mass% of a cationic polymer with respect to a total mass of the pretreatment composition, and 0.1 mass% or more and less than 2.7 mass% of a crosslinking agent with respect to the total mass of the pretreatment composition, and
[4] the cationic polymer contains at least one selected from the group consisting of an allylamine structural unit, a diallylamine structural unit, a diallylammonium structural unit, and an epihalohydrin structural unit.

2) The pretreatment composition according to 1), wherein the crosslinking agent includes one or more cationic crosslinking agents selected from the group consisting of a blocked isocyanate group-containing compound, a carbodiimide group-containing compound, and an oxazoline group-containing compound.
3) The pretreatment composition according to 2), wherein a dissociation temperature of the blocked isocyanate group-containing compound is 120 °C or more.
4) The pretreatment composition according to any one of 1) to 3), wherein a surface tension at 25°C is 35 mN/m to 60 mN/m.
5) A print set comprising: the pretreatment composition according to any one of 1) to 4); and a water-based ink composition containing water, a pigment, a resin emulsion, a water-soluble organic solvent, and a surfactant.
6) An inkjet textile printing method comprising: a pretreatment step of applying the pretreatment composition according to any one of 1) to 4) to a fabric to form a wet precoat layer; and a recording step of adhering, to at least part of a region where the wet precoat layer is formed, a water-based ink composition containing water, a pigment, a resin emulsion, a water-soluble organic solvent, and a surfactant by an inkjet method to form an image region.
7) The inkjet textile printing method according to 6), wherein after the pretreatment step, the recording step is performed in a state in which a remaining amount of the pretreatment composition applied to the fabric is 20 mass% or more with respect to a total amount of the pretreatment composition applied in the pretreatment step.
8) A printed matter obtainable by printing, on a fabric to which the pretreatment composition according to any one of 1) to 4) is applied, the water-based ink composition.

9) A print set comprising: a pretreatment composition containing water, a cationic polymer, and a crosslinking agent; and a water-based white ink composition containing water, a white pigment, a urethane resin, and a water-soluble organic solvent, wherein in the pretreatment composition, a content of the cationic polymer is more than 1.4 mass% and less than 10.5 mass% with respect to a total mass of the pretreatment composition, and a content of the crosslinking agent is 0.1 mass% or more and less than 2.7 mass% with respect to the total mass of the pretreatment composition.
10) The print set according to 9), wherein the cationic polymer is a polymer containing at least one structural unit selected from the group consisting of an allylamine structural unit, a diallylamine structural unit, a diallylammonium structural unit, and an epihalohydrin structural unit.
11) The print set according to 9) or 10), wherein the crosslinking agent includes one or more cationic crosslinking agents selected from the group consisting of a blocked isocyanate group-containing compound, a carbodiimide group-containing compound, and an oxazoline group-containing compound.
12) The print set according to 11), wherein a dissociation temperature of the blocked isocyanate group-containing compound is 120°C or more.
13) The print set according to any one of 9) to 12), wherein a surface tension of the pretreatment composition at 25°C is 35 mN/m to 60 mN/m.
14) The print set according to any one of 9) to 13), wherein the urethane resin includes at least one selected from the group consisting of a polyether-based urethane resin and a polycarbonate-based urethane resin.
15) The print set according to any one of 9) to 14), wherein a glass transition temperature of the urethane resin is 0°C or less.
16) The print set according to any one of 9) to 15), wherein the water-based white ink composition further contains a base.
17) The print set according to any one of 9) to 16), further comprising a water-based ink composition containing water, a pigment, and a polymeric dispersant.
18) The print set according to 17), wherein the polymeric dispersant is a polymer containing at least two constituent monomers selected from the group consisting of a monomer A, a monomer B, and a monomer C represented by the following formula (1):

[Chem. 1]

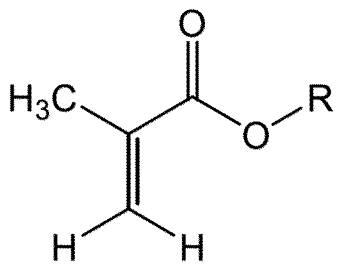

(1)

where the monomer A is a monomer in which R is a hydrogen atom in the formula (1), the monomer B is a monomer in which R is a C1-C4 alkyl group in the formula (1), and the monomer C is a monomer in which R is an aryl group or an aryl C1-C4 alkyl group in the formula (1).
19) The print set according to 17) or 18), wherein the water-based ink composition further contains at least one selected from the group consisting of a urethane resin, a styrene-butadiene resin, and an acrylic resin.
20) An inkjet textile printing method comprising: a pretreatment step of applying, to a fabric, the pretreatment composition included in the print set according to any one of 9) to 19) to form a wet precoat layer; and a step of, without drying the fabric after the pretreatment step, ejecting the water-based white ink composition included in the print set according to any one of 9) to 19) onto a region of part or whole of the wet precoat layer by an inkjet method to form an image.
21) An inkjet textile printing method comprising: a pretreatment step of applying, to a fabric, the pretreatment composition included in the print set according to any one of 9) to 19) to form a wet precoat layer; a step of, without drying the fabric after the pretreatment step, ejecting the water-based white ink composition included in the print set according to any one of 9) to 19) onto a region of part or whole of the wet precoat layer by an inkjet method to form an image; and a step of ejecting, by an inkjet method, the water-based ink composition included in the print set according to any one of 17) to 19) onto part or whole of a region where the image is formed by ejecting the water-based white ink composition, to form an image.
22) The inkjet textile printing method according to 20) or 21), wherein the fabric is polyester or a blend containing

polyester.

23) The inkjet textile printing method according to 22), comprising a step of drying, at 130°C or less, the fabric on which the image is formed, after the step of applying the water-based ink composition.

24) The inkjet textile printing method according to 20) or 21),
wherein the fabric is cotton or a blend containing cotton.

25) The inkjet textile printing method according to 24), comprising a pressure application step of applying pressure to a region where the wet precoat layer is formed, after the pretreatment step.

26) An inkjet textile printing method of forming an image on a fabric using: a pretreatment composition containing water, a cationic polymer, and a crosslinking agent; and at least one water-based ink composition, the inkjet textile printing method comprising: a pretreatment step of applying the pretreatment composition to the fabric to form a wet precoat layer; and a step of, without drying the fabric after the pretreatment step, applying the water-based ink composition to a region of the wet precoat layer, wherein an amount of the pretreatment composition applied per unit area of the fabric is more than 0.035 $g/cm^2$ and less than 0.070 $g/cm^2$, in the pretreatment composition, a content of the cationic polymer is more than 1.4 mass% and less than 10.5 mass% with respect to a total mass of the pretreatment composition, and a content of the crosslinking agent is 0.1 mass% or more and less than 2.7 mass% with respect to the total mass of the pretreatment composition, and the water-based ink composition contains water, a pigment, a resin emulsion, a water-soluble organic solvent, and a surfactant.

27) The inkjet textile printing method according to 26), wherein the resin emulsion contains at least one selected from the group consisting of a urethane resin, a styrene-butadiene resin, and an acrylic resin.

28) The inkjet textile printing method according to 26) or 27), wherein the water-based ink composition further contains a polymeric dispersant.

29) The inkjet textile printing method according to 28), wherein the polymeric dispersant is a polymer containing at least two constituent monomers selected from the group consisting of a monomer A, a monomer B, and a monomer C represented by the following formula (1):

[Chem. 2]

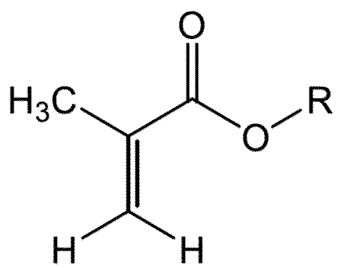

(1)

where the monomer A is a monomer in which R is a hydrogen atom in the formula (1), the monomer B is a monomer in which R is a C1-C4 alkyl group in the formula (1), and the monomer C is a monomer in which R is an aryl group or an aryl C1-C4 alkyl group in the formula (1).

30) The inkjet textile printing method according to any one of 26) to 29), wherein the pigment is a white pigment.

31) The inkjet textile printing method according to any one of 27) to 30), wherein the urethane resin includes at least one selected from the group consisting of a polyether-based urethane resin and a polycarbonate-based urethane resin.

32) The inkjet textile printing method according to any one of 26) to 31), wherein the cationic polymer is a polymer containing at least one structural unit selected from the group consisting of an allylamine structural unit, a diallylamine structural unit, a diallylammonium structural unit, and an epihalohydrin structural unit.

33) The inkjet textile printing method according to any one of 26) to 32), wherein the crosslinking agent includes one or more cationic crosslinking agents selected from the group consisting of a blocked isocyanate group-containing compound, a carbodiimide group-containing compound, and an oxazoline group-containing compound.

34) The inkjet textile printing method according to 33), wherein a dissociation temperature of the blocked isocyanate group-containing compound is 120°C or more.

35) The inkjet textile printing method according to any one of 26) to 34), wherein a surface tension of the pretreatment composition at 25°C is 35 mN/m to 60 mN/m.

36) The inkjet textile printing method according to any one of 26) to 35), wherein the fabric is polyester or a blend containing polyester.

37) The inkjet textile printing method according to 36), comprising a step of drying, at 130°C or less, the fabric on

which the image is formed, after the step of applying the water-based ink composition.

38) The inkjet textile printing method according to any one of 26) to 35), wherein the fabric is cotton or a blend containing cotton.

39) The inkjet textile printing method according to any one of 26) to 38), comprising a pressure application step of applying pressure to a region where the wet precoat layer is formed, after the pretreatment step.

(Advantageous Effect)

It is thus possible to provide a pretreatment composition, a print set including a pretreatment composition and an ink composition (and also including a color ink), and an inkjet textile printing method that suppress the foregoing traces, strike-through, and fuzzing and enable obtainment of an image with high color development when a color ink including white is used.

It is also possible to provide an inkjet textile printing method that suppresses the foregoing traces, strike-through, and fuzzing and enables obtainment of an image with high color development when a color ink including white is used.

DETAILED DESCRIPTION

A best mode for carrying out the present disclosure will be described in detail below, but the present disclosure is not limited to such. "%" and "parts" in this specification, including examples, are all based on mass unless otherwise specified.

A pretreatment composition according to an embodiment contains water, a cationic polymer, and a crosslinking agent.

A print set according to an embodiment contains the pretreatment composition and a water-based ink composition. The water-based ink composition contains water and a pigment.

A pretreatment composition according to a preferred embodiment of the present disclosure is a pretreatment composition that is used to form a wet precoat layer for receiving a water-based ink composition for forming an image on a fabric by an inkjet method, and satisfies all of the following requirements [1] to [4]:

[1] the water-based ink composition contains water, a pigment, a resin emulsion, a water-soluble organic solvent, and a surfactant,

[2] the pretreatment composition is used to form the wet precoat layer in which an amount of the pretreatment composition applied per unit area is more than 0.035 $g/cm^2$ and less than 0.070 $g/cm^2$,

[3] the pretreatment composition contains water, more than 1.4 mass% and less than 10.5 mass% of a cationic polymer with respect to a total mass of the pretreatment composition, and 0.1 mass% or more and less than 2.7 mass% of a crosslinking agent with respect to the total mass of the pretreatment composition, and

[4] the cationic polymer contains at least one selected from the group consisting of an allylamine structural unit, a diallylamine structural unit, a diallylammonium structural unit, and an epihalohydrin structural unit.

A print set according to a preferred embodiment of the present disclosure includes: a pretreatment composition containing water, a cationic polymer, and a crosslinking agent; and a water-based white ink composition containing water, a white pigment, a urethane resin, and a water-soluble organic solvent.

Conventionally, with the method of aggregating resin in an ink composition using a pretreatment liquid, the resin in the ink composition aggregates and the pigment is kept from permeating into the fabric fiber, so that the color development can be improved. However, since the resin aggregates early before coming into contact with the medium to be recorded, the adhesiveness decreases. In view of this, the print set according to this embodiment includes a pretreatment composition containing a cationic polymer and a crosslinking agent, so that the adhesiveness can be improved while maintaining high color development.

In the case where the pretreatment liquid is applied and then the ink composition is adhered to the fabric without drying the applied pretreatment liquid in order to speed up printing, the decrease in adhesiveness mentioned above is more noticeable. With the print set according to this embodiment, the adhesiveness can be improved even in the case of speeding up printing in this way.

Moreover, in the case where, during printing, heating is performed without applying pressure to the surface of the fabric to which the ink composition is adhered in order to fix the ink composition while maintaining the texture of the fabric, the decrease in adhesiveness mentioned above is more noticeable than in the case where pressure is applied to the surface. With the print set according to this embodiment, the adhesiveness can be improved even in the case of using such a textile printing method.

<Pretreatment composition>

The pretreatment composition contains water, more than 1.4 mass% and less than 10.5 mass% of a cationic polymer with respect to the total mass of the pretreatment composition, and 0.1 mass% or more and less than 2.7 mass% of a crosslinking agent with respect to the total mass of the pretreatment composition.

[Water]

The pretreatment composition contains water. As water, pure water such as ion exchange water, ultrafiltrated water, reverse osmosis water, or distilled water, or ultrapure water may be used without any limitation. The content of water is not limited and may be determined as appropriate. To adjust the weight solid content in the pretreatment composition to a suitable range, the content of water is preferably 70 mass% to 99 mass% and more preferably 80 mass% to 98 mass% with respect to the total mass (100 mass%) of the pretreatment composition.

[Cationic polymer]

The pretreatment composition contains more than 1.4 mass% and less than 10.0 mass% of a cationic polymer with respect to the total mass of the pretreatment composition. The cationic polymer contains at least one selected from the group consisting of an allylamine structural unit, a diallylamine structural unit, a diallylammonium structural unit, and an epihalohydrin structural unit, and preferably contains at least one selected from the group consisting of an allylamine structural unit and an epihalohydrin structural unit. All of these cationic polymers are strong electrolytes, and have good dissolution stability in the pretreatment composition and excellent ability to reduce the dispersion of the pigment in the ink.

As the cationic polymer containing an allylamine structural unit, a known cationic polymer containing an allylamine structural unit may be appropriately selected and used. Examples thereof include polyallylamine hydrochloride, polyallylamine amide sulfate, allylamine hydrochloridediallylamine hydrochloride copolymer, allylamine acetate-diallylamine acetate copolymer, allylamine acetate-diallylamine acetate copolymer, allylamine hydrochloride-dimethylallylamine hydrochloride copolymer, allylamine-dimethylallylamine copolymer, polydiallylamine hydrochloride, polymethyldiallylamine hydrochloride, polymethyldiallylamine amide sulfate, a polymethyldiallylamine acetate, polydiallyldimethylammonium chloride, diallylamine acetate-sulfur dioxide copolymer, diallylmethylethylammonium ethyl sulfate-sulfur dioxide copolymer, methyldiallylamine hydrochloridesulfur dioxide copolymer, diallyldimethylammonium chloride-sulfur dioxide copolymer, and diallyldimethylammonium chloride-acrylamide copolymer. A commercially available product may be used as the cationic polymer containing an allylamine structural unit. Specific examples thereof include PAA-HCL-01, PAA-HCL-03, PAA-HCL-05, PAA-HCL-3L, PAA-HCL-10L, PAA-H-HCL, PAA-SA, PAA-01, PAA-03, PAA-05, PAA-08, PAA-15, PAA-15C, PAA-25, PAA-H-10C, PAA-D11-HCL, PAA-D41-HCL, PAA-D19-HCL, PAS-21CL, PAS-M-1L, PAS-M-1, PAS-22SA, PAS-M-1A, PAS-H-1L, PAS-H-5L, PAS-H-10L, PAS-92, PAS-92A, PAS-J-81L, and PAS-J-81 (trade names, available from Nittobo Medical Co., Ltd.), and Hymo Neo-600, Himoloc Q-101, Q-311, and Q-501, and Himax SC-505 and SC-505 (trade names, available from Hymo Corporation).

As the cationic polymer containing a diallylamine structural unit, a known cationic polymer containing a diallylamine structural unit may be appropriately selected and used. Specific examples thereof include PAS-21CL, PAS-21, PAS-M-1L, PAS-M-1, PAS-M-1A, PAS-92, and PAS-92A (available from Nittobo Medical Co., Ltd.), and UNISENCE KCA100L and KCA101L (available from Senka Corporation).

As the cationic polymer containing a diallylammonium structural unit, a known cationic polymer containing a diallylammonium structural unit may be appropriately selected and used. Specific examples thereof include hydrochlorides or ethyl sulfates of diallyldimethylammonium or diallylmethylethylammonium. The cationic polymer containing a diallylammonium structural unit is preferable because it exhibits particularly excellent aggregation property and enables obtainment of a printed matter having excellent color development with little color bleeding or color unevenness on a substrate. A commercially available product may be used as the cationic polymer containing a diallylammonium structural unit. Specific examples thereof include PAS-H-1L, PAS-H-5L, PAS-H-10L, PAS-24, PAS-J-81L, PAS-J-81, and PAS-J-41 (available from Nittobo Medical Co., Ltd.), and UNISENCE FPA100L, FPA101L, FPA102L, FPA1000L, FPA1001L, FPA1002L, FCA1000L, FCA1001L, and FCA5000L (available from Senka Corporation). A commercially available product of a cationic polymeric compound containing both a diallylamine structural unit and a diallylammonium structural unit is, for example, PAS-880 (available from Nittobo Medical Co., Ltd.).

As the cationic polymer containing an epihalohydrin structural unit, a known cationic polymer containing an epihalohydrin structural unit may be appropriately selected and used. Specific examples thereof include epihalohydrin-modified polyamine compounds, epihalohydrin-modified polyamide compounds, epihalohydrin-modified polyamidepolyamine compounds, and epihalohydrinamine copolymers. As the epihalohydrin, epichlorohydrin or methylepichlorohydrin is preferably selected from the viewpoint of availability and the like. The cationic polymer containing an epihalohydrin structural unit is preferably selected because a printed matter using the cationic polymer containing an epihalohydrin structural unit has excellent water resistance. A commercially available product may be used as the cationic polymer containing an epihalohydrin structural unit. Specific examples thereof include FL-14 (available from SNF), ARAFIX 100, 251S, 255, and 255LOX (available from Arakawa Chemical Industries, Ltd.), DK-6810, 6804, 6850, 6854, and 6885; WS-4010, 4011, 4020, 4024, 4027, and 4030 (available from Seiko PMC Corporation), UNISENCE KHE100L and PAPYOGEN P-105 (available from Senka Corporation), Sumirez Resin 650(30), 675A, 6615, and SLX-1 (available from Taoka Chemical Co., Ltd.), Cationmaster PD-7, 30, A, PDT-2, PE-10, PE-30, DT-EH, EPA-SK01, and TMHMDA-E (available from Yokkaichi Chemical Co., Ltd.), and JETFIX 36N, 38A, and 5052 (available from Satoda Chemical Industrial Co., Ltd.).

The foregoing cationic polymer may be synthesized by a known synthesis method, or may be a commercially available product.

The content of the cationic polymer is more than 1.4 mass% and less than 10.5 mass%, preferably 1.7 mass% to 8.0 mass%, more preferably 2.0 mass% to 7.0 mass%, and particularly preferably 2.5 mass% to 6.0 mass% with respect to the total mass of the pretreatment composition. As a result of the content of the cationic polymer being more than 1.4 mass%, effective aggregation capacity can be achieved, and strike-through and whiteness tend to be improved. As a result of the content of the cationic polymer being less than 10.5 mass%, excellent storage stability and trace reduction tend to be achieved.

The viscosity of the cationic polymer in a 10 mass% water solution at 25°C is preferably 1.0 mPa·s to 5.0 mPa·s, more preferably 1.0 mPa·s to 2.5 mPa·s, further preferably 1.0 mPa·s to 2.0 mPa·s, and particularly preferably 1.0 mPa s to 1.5 mPa s. Selecting such a cationic polymer whose viscosity in a 10 mass% water solution is 1.0 mPa·s to 5.0 mPa·s tends to improve the fluidity of the pretreatment composition and the color development during printing.

The weight-average molecular weight of the cationic polymer is typically 300 to 40000, preferably 500 to 18000, more preferably 750 to 15000, and further preferably 1000 to 10000, from the viewpoint of the miscibility with other components contained in the pretreatment composition, the water resistance of the fabric after pretreatment, the washing fastness, the adhesiveness, etc. If the weight-average molecular weight is 300 or more, effective aggregation capacity can be achieved, and strike-through and whiteness tend to be improved. If the weight-average molecular weight is 40000 or less, it can be used as a water solution, and excellent storage stability tends to be achieved. If the weight-average molecular weight is 40000 or less, unevenness on a white substrate tends to be suppressed and the decrease in whiteness tends to be reduced, and also strike-through tends to be reduced.

The weight-average molecular weight of the cationic polymer can be measured by standard polystyrene conversion using gel permeation chromatography (GPC).

[Crosslinking agent]

The pretreatment composition contains 0.1 mass% or more and less than 2.7 mass% of a crosslinking agent with respect to the total mass of the pretreatment composition. The crosslinking agent preferably includes, for example, one or more cationic crosslinking agents selected from the group consisting of a blocked isocyanate group-containing compound, a carbodiimide group-containing compound, and an oxazoline group-containing compound. The crosslinking agent more preferably includes at least a blocked isocyanate group-containing compound and a carbodiimide group-containing compound.

In the present disclosure, the term "blocked isocyanate group-containing compound" refers to a compound obtained by blocking an isocyanate group in a polyisocyanate compound with a blocking agent.

The blocked isocyanate group-containing compound is a compound obtained by blocking an isocyanate group in a polyisocyanate compound with a blocking agent. As a result of the highly reactive isocyanate group being blocked, the isocyanate group is stabilized, so that a strong ink film can be formed after crosslinking reaction while the storage stability of the aqueous composition is improved. A polyisocyanate compound is a compound containing two or more isocyanate groups in one molecule. Examples of the polyisocyanate compound include aliphatic isocyanates, alicyclic isocyanates, araliphatic isocyanates, aromatic isocyanates, and modified products thereof. Examples of modified products of polyisocyanate compounds include multimers such as isocyanurate; biuret; and adducts of trimethylolpropane or pentaerythritol with polyhydric alcohols.

As the aliphatic isocyanate, for example, a diisocyanate having a linear or branched aliphatic hydrocarbon group between two isocyanate groups is preferable. The carbon number of the aliphatic hydrocarbon group is preferably 2 or more and more preferably 3 or more, and preferably 10 or less, more preferably 9 or less, and further preferably 8 or less. Specific examples include tetramethylene diisocyanate, pentamethylene diisocyanate, hexamethylene diisocyanate (HDI), heptamethylene diisocyanate, octamethylene diisocyanate, decamethylene diisocyanate, dodecamethylene diisocyanate, and 2,2,4- or 2,4,4-trimethylhexamethylene diisocyanate. Examples of the alicyclic isocyanate include hydrogenated xylylene diisocyanate (H6XDI), 1,4-cyclohexane diisocyanate, 4,4'-dicyclohexylmethane diisocyanate (H12MDI), isophorone diisocyanate (IPDI), and 2,5- or 2,6-norbornane diisocyanate. Examples of the araliphatic isocyanate include m- or p-xylylene diisocyanate (XDI) and tetramethylxylylene diisocyanate (TMXDI). Examples of the aromatic isocyanate include 1,3- or 1,4-phenylene diisocyanate, 2,4- or 2,6-tolylene diisocyanate (TDI), 4,4'- or 2,4'-diphenylmethane diisocyanate (MDI), m- or p-isocyanatophenylsulfonyl isocyanate, 4,4'-diisocyanatobiphenyl, 4,4'-diisocyanate-3,3'-dimethylbiphenyl, 1,5-naphthylene diisocyanate, and 2,6-dimethylbenzene-1,4-diisocyanate.

Examples of the blocking agent include amines such as 3,5-dimethylpyrazole (DMP), 1,2,4-triazole, and diisopropylamine; phenols such as phenol and cresol; oximes such as methylethylketoxime; lactams such as ε-caprolactam; and compounds having active hydrogen, e.g., active methylene compounds such as diethyl malonate and ethyl acetoacetate. Among these, 3,5-dimethylpyrazole (DMP) and methylethylketoxime are preferable, and 3,5-dimethylpyrazole (DMP) is more preferable.

The dissociation temperature of the blocked isocyanate group-containing compound is preferably 120°C or more and more preferably 125°C or more, from the viewpoint of storage stability, scratch resistance, and adhesiveness. If the dissociation temperature is 120°C or more, the storage stability of the pretreatment composition tends to be improved. The dissociation temperature is preferably 200°C or less and more preferably 180°C or less, from the viewpoint of suppressing damage such as deformation of the recording medium. Particularly in the case where polyester or a blend including polyester is used for the fabric, the dissociation temperature is preferably 130°C or less because the drying step after printing needs to be performed at a drying temperature of 130°C or less in order to prevent dye migration (hereafter also simply referred to as migration).

Examples of commercially available products of the blocked isocyanate group-containing compound include Trixene blocked isocyanates Aqua BI120, Aqua BI200, AquaBI220, Aqua BI522, 7950, 7951, 7960, 7961, 7982, 7990, 7991, and 7992 (available from Baxenden Chemicals Ltd., trade name); DM-6400, MEIKANATE DM-3031CONC, MEIKANATE DM-35HC, MEIKANATE TP-10, MEIKANATE ST, MEIKANATE PRO, and NBP-873D (available from Meisei Chemical Works, Ltd., trade name); ERASTRON BN-69, BN-77, BN-27, and BN-11 (available from DKS Co. Ltd., trade name); TAKENATE WB-700, WB-770, and WB-920 (available from Mitsui Chemicals Polyurethane Co., Ltd., trade name); DURANATE MF-K60B, SBN-70D, MF-B60B, MF-B90B, 17B-60P, TPA-B80B, TPA-B80E, and E402-B80B (available from Asahi Kasei Corporation, trade name); and FIXER N (available from Matsui Shikiso Chemical Co., Ltd.).

The carbodiimide group-containing compound is preferably a polycarbodiimide compound containing two or more carbodiimide groups in one molecule, from the viewpoint of the storage stability, scratch resistance, solvent resistance, and adhesiveness of the pretreatment composition. As the carbodiimide group-containing compound, for example, a compound obtained by blocking, with a hydrophilic group, a terminal isocyanate group of a condensation reaction product obtained by a decarboxylation condensation reaction in the presence of a carbodiimidation catalyst of diisocyanates is preferable.

Examples of diisocyanates used in the decarboxylation condensation reaction include aliphatic diisocyanates such as hexamethylene diisocyanate (HDI), decamethylene diisocyanate, and 2,4,4-trimethylhexamethylene diisocyanate; alicyclic diisocyanates such as 4,4'-dicyclohexylmethane diisocyanate (H12MDI), isophorone diisocyanate (IPDI), 2,5- or 2,6-norbornane diisocyanate, hydrogenated xylylene diisocyanate (H6XDI), hydrogenated tolylene diisocyanate, and 2,4-bis-(8-isocyanatooctyl)-1,3-dioctylcyclobutane (OCDI); araliphatic diisocyanates such as m- or p-xylylene diisocyanate (XDI) and tetramethylxylylene diisocyanate (TMXDI); and aromatic diisocyanates such as 2,4,6-triisopropylphenyl diisocyanate (TIDI), 4,4'- or 2',4-diphenylmethane diisocyanate (MDI), and 2,4- or 2,6-tolylene diisocyanate (TDI).

The compound obtained by blocking the terminal isocyanate group of the condensation reaction product with a hydrophilic group is a compound containing a functional group capable of reacting with the isocyanate group, such as polyethylene glycol monomethyl ether and polypropylene glycol monomethyl ether. Among these, polyethylene glycol monomethyl ether is preferable from the viewpoint of the compatibility of the carbodiimide group-containing compound with the pretreatment composition and the storage stability of the pretreatment composition. By adjusting the number of moles of ethylene oxide added in the polyethylene glycol monomethyl ether, the obtained carbodiimide group-containing polymer can be blended into the aqueous composition in the form of an emulsion or water solution.

The carbodiimide group-containing compound is preferably blended into the pretreatment composition as a water solution or emulsion, from the viewpoint of the storage stability, scratch resistance, solvent resistance, and substrate adhesiveness of the pretreatment composition. The carbodiimide group-containing compound is preferably blended into the pretreatment composition as a water solution, from the viewpoint of the storage stability of the pretreatment composition.

Examples of commercially available products of the carbodiimide group-containing compound include CARBODILITE E-02, CARBODILITE E-03A, CARBODILITE E-05, CARBODILITE V-02, CARBODILITE V-02-L2, and CARBODILITE V-04 (available from Nisshinbo Chemical Inc., trade name). Among these, CARBODILITE E-02 and CARBODILITE V-04 are preferable from the viewpoint of the storage stability of the pretreatment composition.

The oxazoline group-containing compound is preferably blended into the pretreatment composition as a water solution or emulsion, and is preferably a polyoxazoline compound containing two or more oxazoline groups in one molecule, from the viewpoint of the storage stability, scratch resistance, solvent resistance, and adhesion of the pretreatment composition.

Examples of commercially available products of the oxazoline group-containing compound include "EPOCROS

WS Series" such as EPOCROS WS-300, EPOCROS WS-500, and EPOCROS WS-700 (available from Nippon Shokubai Co., Ltd., water-soluble type); and "EPOCROS K Series" such as EPOCROS K-2010E and EPOCROS K-2020E (available from Nippon Shokubai Co., Ltd., trade name, emulsion type). Among these, EPOCROS WS-300, EPOCROS WS-500, and EPOCROS WS-700 are preferable from the viewpoint of the storage stability of the pretreatment composition.

The content of the crosslinking agent is 0.1 mass% or more and less than 2.7 mass%, preferably 0.2 mass% to 2.0 mass%, more preferably 0.4 mass% to 1.5 mass%, and further preferably 0.6 mass% to 1.0 mass% with respect to the total mass of the pretreatment composition. If the content of the crosslinking agent is 0.1 mass% or more, effective adhesiveness tends to be achieved. If the content of the crosslinking agent is 2.7 mass% or less, excellent storage stability and trace reduction tend to be achieved.

[Other components]

In addition to the foregoing components, the pretreatment composition may further contain preparation agents such as a resin emulsion, a water-soluble organic solvent, a surface tension adjuster, an antifungal agent, an antiseptic, a pH adjuster, a chelating reagent, an anti-rust agent, a water-soluble ultraviolet absorber, an antioxidant, and a sizing agent.

-- Resin emulsion --

Examples of the resin emulsion include emulsions formed from (meth)acrylic resin, (meth)acrylic resin copolymer, styrene-maleic anhydride copolymer resin, epoxy resin, urethane resin, polyether resin, polyamide resin, unsaturated polyester resin, phenol resin, silicone resin, fluorine resin, polyvinyl resin (vinyl chloride, vinyl acetate, polyvinyl alcohol, etc.), vinyl acetate-(meth)acrylic copolymer resin, vinyl acetate-ethylene copolymer resin, alkyd resin, polyester resin, amino resin (melanin resin, ureaformaldehyde resin, urea resin, melanin-formaldehyde resin, etc.), and the like. The resin emulsion may contain two or more resins. The two or more resins may form a core/shell structure. These resin emulsions may be used singly or in combination of two or more. Among these resin emulsions, a resin that forms a transparent coating film is preferably used. Acrylic resin emulsions and urethane resin emulsions are preferable from the viewpoint of the storage stability, scratch resistance, and adhesiveness of the pretreatment composition.

(Meth)acrylic resin and (meth)acrylic resin copolymer emulsions are commercially available, and most of them are emulsified liquids with a solid content concentration of 30 mass% to 60 mass%. Examples thereof include The Nippon Synthetic Chemical Industry Co., Ltd.'s Mowinyl 966A, 6963, and 6960 (acrylic resin emulsion, all trade names), 6969D and RA-033A4 (styrene/acrylic resin emulsion, all trade names), BASF SE's JONCRYL 7100, PDX-7370, and PDX-7341 (styrene/acrylic resin emulsion, all trade names), and DIC Corporation's VONCOAT EC-905EF, 5400EF, and CG-8400 (acrylic/styrene-based emulsion).

Urethane resin emulsions are commercially available, and most of them are emulsified liquids with a solid content concentration of 30 mass% to 60 mass%. Examples of commercially available products of urethane resin emulsions include PERMARIN UA-150, 200, 310, 368, and 3945, UCOAT UX-320 and 340 (available from Sanyo Chemical Industries, Ltd.); HYDRAN WLS-201, 210, and HW-312B latexes (available from DIC Corporation); and SUPERFLEX 150, 170, and 470 (available from DKS Co. Ltd.). Among these, examples of polycarbonate-based urethane resins include PERMARIN UA-310, and 3945; UCOAT UX-320; and HYDRAN WLS-210, 213, and 250, and examples of polyether-based urethane resins include PERMARIN UA-150, and 200; UCOAT UX-340; and HYDRAN WLS-201, 202, and 230.

In the case where the urethane resin in the urethane resin emulsion contains an acidic group such as a carboxy group, a sulfo group, or a hydroxyl group, the acidic group may be converted to an alkali salt. For example, the acidic group can be converted to the alkali salt by adding the urethane resin containing the acidic group to water and stirring them to prepare a water solution and adding an alkaline compound to the water solution to adjust the pH to 6.0 to 12.0. Examples of the alkaline compound include alkali metal hydroxides such as lithium hydroxide, sodium hydroxide, and potassium hydroxide; and alkaline earth metal hydroxides such as beryllium hydroxide, magnesium hydroxide, calcium hydroxide, and strontium hydroxide. These alkaline compounds may be used singly or in combination of two or more.

-- Water-soluble organic solvent --

Examples of the water-soluble organic solvent include glycol-based solvents, polyhydric alcohols, and polyhydric alcohol alkyl ethers. Examples of glycol-based solvents include glycerin, polyglycerin (#310, #750, #800), diglycerin, triglycerin, tetraglycerin, pentaglycerin, hexaglycerin, heptaglycerin, octaglycerin, nonaglycerin, decaglycerin, undecaglycerin, dodecaglycerin, tridecaglycerin, and tetradecaglycerin. Examples of polyhydric alcohols include C2-C6 polyhydric alcohols having 2 to 3 alcoholic hydroxyl groups, di- or tri-C2-C3 alkylene glycols, and poly C2-C3 alkylene glycols (preferably liquid polyalkylene glycols) having 4 or more repeating units and a molecular weight of about 20000

or less. Specific examples of polyhydric alcohols include ethylene glycol, diethylene glycol, triethylene glycol, propylene glycol, polyethylene glycol, polypropylene glycol, 1,3-propanediol, 1,2-butanediol, thiodiglycol, 1,3-butanediol, 1,4-butanediol, 2,3-butanediol, 3-methyl-1,3-butanediol, 1,2-pentanediol, 1,5-pentanediol, 2-methyl-2,4-pentanediol, 3-methyl-1,5-pentanediol, 1,2-hexanediol, 1,6-hexanediol, trimethylolpropane, 1,3-pentanediol, and 1,5-pentanediol. Examples of polyhydric alcohol alkyl ethers include alkylene glycol monoalkyl ether, dialkylene glycol monoalkyl ether, and trialkylene glycol monoalkyl ether. Specific examples thereof include ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoisobutyl ether, tetraethylene glycol monomethyl ether, propylene glycol monoethyl ether, dipropylene glycol monomethyl ether, dipropylene glycol monobutyl ether, tripropylene glycol monomethyl ether, tripropylene glycol monobutyl ether, and triethylene glycol monobutyl ether.

Compounds that dissolve in water and act as wetting agents are also included in water-soluble organic solvents, for the sake of convenience. Examples of such compounds include urea, ethylene urea, and sugars. These water-soluble organic solvents may be used singly or in combination of two or more.

The water-soluble organic solvent preferably includes at least one selected from glycerin, diethylene glycol, triethylene glycol, propylene glycol, 1,2-hexanediol, 1,6-hexanediol, 1,5-pentanediol, and diethylene glycol monobutyl ether.

The content of the water-soluble organic solvent is typically 0.5 mass% to 20 mass%, preferably 1 mass% to 15 mass%, and more preferably 2 mass% to 10 mass% with respect to the total mass of the pretreatment composition. As a result of the content being in this range, the whiteness of the substrate and strike-through tend to be improved, and the storage stability of the pretreatment composition is excellent.

-- Surface tension adjuster --

Although the type of surface tension adjuster is not limited, for example, a surfactant selected from acetylene glycol and polyalkylene glycol is preferable. As a result of a surfactant being contained in the pretreatment composition, the increase in the viscosity of the pretreatment composition, aggregation of components, and the like are suppressed and the storage stability is improved.

In particular, a pretreatment composition containing at least polyalkylene glycol as a surfactant tends to be further improved in the whiteness of the substrate and strike-through.

As the acetylene glycol surfactant, for example, a surfactant selected from 2,4,7,9-tetramethyl-5-desine-4,7-diol, 2,4,7,9-tetramethyl-5-desine-4,7-diol, 2,4-dimethyl-5-desine-4-ol, 2,4-dimethyl-5-desine-4-ol, and alkylene oxide adducts thereof is preferable, and a surfactant selected from the alkylene oxide adducts is more preferable. Examples of the alkylene oxide include C2-C4 linear, branched, and cyclic alkylene oxides. Among these, linear or branched alkylene oxides are preferable. Examples of the surfactant selected from the alkylene oxide adducts include SURFYNOL Series (420, 440, 465, 61, etc.) and OLFINE Series (E1004, E1010, EXP-4001, etc.) available from Nissin Chemical Co., Ltd.

As the polyalkylene glycol surfactant, for example, a surfactant selected from polyoxyalkylene alkyl ethers (e.g. polyoxyethylene alkyl ether), fatty acid ethylene oxide adducts, higher alkylamine ethylene oxide adducts, and polyoxy C2-C4 alkylene glycols is preferable. Among these, polyoxy C2-C4 alkylene glycols are preferable.

Examples of polyoxyalkylene alkyl ethers include polyoxyalkylene branched decyl ether, polyoxyalkylene tridecyl ether, polyoxyethylene isodecyl ether, and polyoxyalkylene lauryl ether. Examples of commercially available products thereof include NOIGEN XL-40, 50, 60, 70, 80, 100, 140, and 160, and NOIGEN TDS-30, 50, 70, 80, 90, 100, and 120 available from DKS Co. Ltd.

Examples of fatty acid ethylene oxide adducts include stearic acid ethylene oxide adducts and polyethylene glycol lauric acid esters. Examples of commercially available products thereof include EMANON 1112, 3199V, 3299V, 3299VR, and 3201M-V available from Kao Corporation.

Examples of commercially available products of higher alkylamine ethylene oxide adducts include AMIET 102, 105, 105A, 302, and 320 available from Kao Corporation.

Examples of commercially available products of polyoxy C2-C4 alkylene glycols include EMULGEN PP-290 (a copolymer of polyethylene glycol/polypropylene glycol = 160/30) available from Kao Corporation; NEWPOL PE-61, PE-62, PE-64, PE-68, PE-71, PE-74, PE-75, PE-78, and PE-108 (polyoxyethylene polyoxypropylene block polymer) available from Sanyo Chemical Industries, Ltd.; and EPAN 410, 420, 450, 485, 680, 710, 720, 740, 750, 785, U-103, U-105, and U-108 (polyoxyethylene polyoxypropylene glycol with the weight-average molecular weight of polypropylene glycol being about 950 to 4000 and the content of polyoxyethylene being about 5% to 95%) available from DKS Co. Ltd. As polyoxy C2-C4 alkylene glycol, polyoxy C2-C3 alkylene glycol is preferable, and polyoxyethylene polyoxypropylene glycol is more preferable. The number of oxy C2 alkylene groups in the total number of oxy C2-C4 alkylene groups in the polyoxy C2-C4 alkylene glycol is typically less than 50%, preferably 15% to 45%, and more preferably 20% to 40%. As an example, when the total number of bonds of the oxy C2 alkylene group, the oxy C3 alkylene group, and the oxy

C4 alkylene group is 10, the number of bonds of the oxyalkylene group is less than 5. The respective numbers of bonds of the oxy C2-C4 alkylene groups are each an average value. When the polyoxy C3-C4 alkylene group is a hydrophobic group and the polyoxy C2 alkylene group is a hydrophilic group in polyoxyalkylene glycol, the weight-average molecular weight of the hydrophobic group is typically 2250 to 4000, and preferably 2750 to 3600. For example, EPAN U-103 satisfies both the content of the oxy C2 alkylene group and the weight-average molecular weight of the hydrophobic group. As a result of such a surfactant being contained in the pretreatment composition containing the cationic polymer, the storage stability can be improved.

The content of the surfactant is typically 0.05% to 5%, preferably 0.05% to 3%, more preferably 0.05% to 1%, and further preferably 0.1% to 0.5% with respect to the total mass of the pretreatment composition. As a result of the content of the surfactant being in this range, the washing fastness and abrasion resistance of the printed fiber tend to be excellent, and the storage stability of the pretreatment composition tends to be excellent.

-- Antifungal agent --

Specific examples of the antifungal agent include sodium dehydroacetate, sodium benzoate, sodium pyridinethione-1-oxide, ethyl p-hydroxybenzoate, 1,2-benzisothiazolin-3-one, and salts thereof.

-- Antiseptic --

Examples of the antiseptic include compounds such as organic sulfur-based, organic nitrogen sulfur-based, organic halogen-based, haloallylsulfone-based, iodopropargyl-based, N-haloalkylthio-based, nitrile-based, pyridine-based, 8-oxyquinoline-based, benzothiazole-based, isothiazolin-based, dithiol-based, pyridine oxide-based, nitropropane-based, organic tin-based, phenol-based, quaternary ammonium salt-based, triazine-based, thiazine-based, anilide-based, adamantane-based, dithiocarbamate-based, brominated indanone-based, benzyl bromoacetate-based, and inorganic salt-based. Specific examples of the organic halogen-based compound include sodium pentachlorophenol. Specific examples of the pyridine oxide-based compound include sodium 2-pyridinethiol-1-oxide. Specific examples of the isothiazolin-based compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Specific examples of other antiseptics (antiseptic antifungal agents) include sodium acetate anhydride, sodium sorbate, sodium benzoate, and PROXEL® GXL(S) (PROXEL is a registered trademark in Japan, other countries, or both) and PROXEL® XL-2(S) (trade name) available from Lonza KK.

-- pH adjuster --

As the pH adjuster, any substance may be used as long as it can control the pH of the ink in the range of, for example, 3.0 to 9.0 without adversely affecting the pretreatment composition prepared. Examples of the pH adjuster include alkali metal hydroxides, alkaline earth metal hydroxides, aliphatic amine compounds, and alcohol amine compounds. Examples of the alkali metal hydroxides include lithium hydroxide, sodium hydroxide, and potassium hydroxide. Examples of the alkaline earth metal hydroxides include beryllium hydroxide, magnesium hydroxide, calcium hydroxide, and strontium hydroxide. Among these, the alkaline earth metal hydroxides are preferable, and lithium hydroxide and sodium hydroxide are more preferable. Examples of the aliphatic amine compounds include ammonia, monomethylamine, dimethylamine, trimethylamine, monoethylamine, diethylamine, and triethylamine. Ammonia or triethylamine is preferable. Examples of the alcohol amine compounds include monoethanolamine, diethanolamine, triethanolamine, monopropanolamine, dipropanolamine, tripropanolamine, methylethanolamine, dimethylethanolamine, diethylethanolamine, and N-methyldiethanolamine. Tertiary amines are preferable, and triethanolamine is more preferable.

Other specific examples include alkali metal carbonates such as lithium carbonate, sodium carbonate, sodium hydrogen carbonate, and potassium carbonate; alkali metal salts of organic acids such as sodium silicate and potassium acetate; and phosphates such as disodium phosphate.

-- Chelating reagent --

Specific examples of the chelating reagent include disodium ethylenediamine tetraacetate, sodium nitrilotriacetate, sodium hydroxyethylethylenediamine triacetate, sodium diethylenetriamine pentaacetate, and sodium uracildiacetate.

-- Anti-rust agent --

Specific examples of the anti-rust agent include acid sulfite, sodium thiosulfate, ammonium thioglycolate, diisopropylammonium nitrite, pentaerythritol tetranitrate, and dicyclohexylammonium nitrite.

-- Water-soluble ultraviolet absorber --

Examples of the water-soluble ultraviolet absorber include sulfonated benzophenone-based compounds, benzotriazole-based compounds, salicylic acid-based compounds, cinnamic acid-based compounds, and triazine-based compounds.

-- Antioxidant --

Examples of the antioxidant include various organic-based and metal complex-based antioxidants (also referred to as "anti-fading agents"). Specific examples of the organic-based antioxidant include hydroquinones, alkoxyphenols, dialkoxyphenols, phenols, anilines, amines, indanes, chromans, alkoxyanilines, and heterocycles.

-- Sizing agent --

Examples of the sizing agent include starches such as corn and wheat; cellulose compounds such as carboxymethylcellulose and hydroxymethylcellulose; polysaccharides such as sodium alginate, gum arabic, locust bean gum, tranto gum, guar gum, and tamarind seed, and proteins such as gelatin and casein; natural water-soluble polymers such as tannin and lignin; and synthetic water-soluble polymeric compounds containing polyvinyl alcohol, polyethylene oxide, acrylic acid, maleic anhydride, etc. The content of the sizing agent is typically about 0% to 20% with respect to the total mass of the pretreatment composition.

[Surface tension of pretreatment composition]

The surface tension of the pretreatment composition at 25°C is preferably 35 mN/m to 60 mN/m, more preferably 36 mN/m to 58 mN/m, further preferably 37 mN/m to 56 mN/m, and particularly preferably 38 mN/m to 54 mN/m, from the viewpoint of exhibiting sufficient wettability to various fabrics.

The surface tension of the pretreatment composition at 25°C is preferably not less than the surface tension of the below-described water-based ink composition, from the viewpoint of preventing bleeding of the printed matter. As a result of the surface tension of the pretreatment composition being more than the surface tension of water-based ink composition, the amount of surfactant oriented on the surface of the precoat layer formed by applying the pretreatment composition to the fabric can be reduced. Since the surface energy of the precoat layer does not decrease excessively, the wettability of the ink composition applied subsequently is good, and thus a printed matter of high image quality with high dot roundness and no bleeding can be obtained.

The surface tension of the pretreatment composition can be measured by the platinum plate method in a 25°C environment using, for example, a surface tensiometer (CBVPZ available from Kyowa Interface Science Co., Ltd.).

[Viscosity of pretreatment composition]

The viscosity of the pretreatment composition at 25°C is preferably 0.5 mPa·s to 4.0 mPa·s, more preferably 0.7 mPa·s to 3.5 mPa·s, and particularly preferably 0.8 mPa·s to 3.0 mPa·s. If the pretreatment composition satisfies the foregoing viscosity range, the pretreatment composition can be applied evenly regardless of the application method of the pretreatment composition or the type of fabric, and unevenness in dot shape and inhomogeneity in image can be prevented. An excellent printed matter can be obtained from the viewpoint of the wettability to the fabric and the suppression of unevenness during drying, too.

The viscosity of the pretreatment composition can be measured using, for example, an E-type viscometer (TVE25L type viscometer available from Toki Sangyo Co., Ltd.).

[pH of pretreatment composition]

The pH of the pretreatment composition at 25°C is preferably 3.0 to 10.0, more preferably 3.5 to 8.0, and particularly preferably 4.0 to 6.0. If the pretreatment composition satisfies the foregoing pH range, embrittlement of the fabric can be prevented, and a printed matter having excellent color development with little color bleeding or color unevenness can be obtained.

The pH of the pretreatment composition can be measured by a known method, for example, using a desktop pH meter F-72 available from Horiba Ltd. with a standard ToupH electrode or a sleeve ToupH electrode.

[Preparation method for pretreatment composition]

An example of the preparation method for the pretreatment composition according to this embodiment is a method in which water, a cationic polymer, a crosslinking agent, and optionally preparation agents as mentioned above are added, stirred and mixed, and then optionally subjected to filtering. The preparation method for the pretreatment composition according to this embodiment is, however, not limited to such.

<Water-based ink composition>

A water-based ink composition according to this embodiment contains water and a pigment.

A water-based ink composition according to a preferred embodiment of the present disclosure contains water, a pigment, a resin emulsion, a water-soluble organic solvent, and a surfactant, and preferably further contains a polymeric dispersant. In this specification, the "water-based ink composition" may be abbreviated as "ink composition" or "ink".

A water-based ink composition according to another preferred embodiment of the present disclosure is a water-based white ink composition that contains water, a white pigment, a urethane resin, and a water-soluble organic solvent and preferably further contains a base. In this specification, the "water-based white ink composition" may be abbreviated as "white ink composition" or "white ink". The water-based white ink composition will be described in detail later.

A water-based ink composition according to another preferred embodiment of the present disclosure contains water, a pigment, and a polymeric dispersant, and preferably further contains at least one selected from the group consisting of a urethane resin, a styrene-butadiene resin, a (meth)acrylic resin, and a (meth)acrylic resin copolymer. The water-based ink composition may further contain a water-soluble organic solvent and a surfactant. The water-based ink composition is preferably used in combination with the foregoing water-based white ink composition.

[Water]

As the water contained in the water-based ink composition, for example, any of the examples described for the pretreatment composition above may be used. The content of the water is not limited and may be determined as appropriate, but may be 20 mass% to 80 mass% with respect to the total mass (100 mass%) of the water-based ink composition in order to adjust the viscosity of the water-based ink composition to the suitable range. For example, the content of the water is preferably 40 mass% to 80 mass%, more preferably 45 mass% to 75 mass%, and further preferably 50 mass% to 70 mass%, without being limited thereto.

[Pigment]

The pigment is not limited, and may be a known pigment. Known pigments include inorganic pigments, organic pigments, and extender pigments.

Examples of inorganic pigments include carbon black, metal oxides, hydroxides, sulfides, ferrocyanides, and metal chlorides. Among these, carbon black is preferable as a black pigment.

There are a plurality of types of carbon black, including thermal black and acetylene black, which are obtained by a thermal decomposition method, and oil furnace black, gas furnace black, lamp black, gas black, and channel black, which are obtained by an incomplete combustion method.

Among these, acetylene black, oil furnace black, gas furnace black, lamp black, channel black, etc. are preferable as carbon black.

Specific examples of carbon black include Raven 760 ULTRA, Raven 780 ULTRA, Raven 790 ULTRA, Raven 1060 ULTRA, Raven 1080 ULTRA, Raven 1170, Raven 1190 ULTRA II, Raven 1200, Raven 1250, Raven 1255, Raven 1500, Raven 2000, Raven 2500 ULTRA, Raven 3500, Raven 5000 ULTRA II, Raven 5250, Raven 5750, and Raven 7000 (available from Columbia Carbon. Co.); Monarch 700, Monarch 800, Monarch 880, Monarch 900, Monarch 1000, Monarch 1100, Monarch 1300, Monarch 1400, Regal 1330R, Regal 1400R, Regal 1660R, and Mogul L (available from Cabot Corporation); Color Black FW1, Color Black FW2, Color Black FW2V, Color Black FW200, Color Black S150, Color Black S160, Color Black S 170, Printex 35, Printex U, Printex V, Printex 140U, Printex 140V, Special Black 4, Special Black 4A, Special Black 5, and Special Black 6 (available from Degussa AG); and MA7, MA8, MA100, MA600, MCF-88, No.25, No.33, No.40, No.47, No.52, No.900, and No.2300 (available from Mitsubishi Chemical Corporation).

Preferred white pigments include metal oxides. Examples of metal oxides include zinc oxide, titanium oxide, and zirconium oxide. Titanium oxide is preferable. Examples of titanium oxide include rutile type and anatase type. Titanium oxide may be directly used in powder form or may be surface-treated with other materials such as silicon

dioxide, aluminum oxide, zirconium oxide, zinc oxide, and hydroxy group-comprising organic compounds. Preferred among these is surface-treated titanium oxide.

Specific examples of titanium oxide include DUAWHITE TCR-52, TITONE R-32, TITONE R-7E, TITONE R-21, TITONE R-62N, and TITONE R-42 (available from Sakai Chemical Industry Co., Ltd.); TIPAQUE CR-50, TIPAQUE CR-50-2, TIPAQUE CR-58, TIPAQUE CR-60, TIPAQUE CR-80, and TIPAQUE CR-90 (available from Ishihara Sangyo Kaisha, Ltd.); TITANIX JA-600A and TITANIX JR-605 (available from Tayca Corporation); and ST-455, ST-455WB, ST-457SA, and ST-457EC (available from Titan Kogyo, Ltd.).

Since the below-described water-based white ink composition contains a white pigment, the water-based ink composition used in combination with the water-based white ink composition preferably contains a pigment other than the white pigment.

Examples of organic pigments include azo pigments, which have at least one azo group in the molecule, phthalocyanine pigments, quinacridone pigments, isoindolinone pigments, dioxazine pigments, perylene pigments, perinone pigments, thioindigo pigments, anthraquinone pigments, and quinophthalone pigments.

Specific examples of organic pigments include yellow pigments such as C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 155, 180, 185, 193, 199, and 202; red pigments such as C.I. Pigment Red 5, 7, 12, 48, 48:1, 57, 88, 112, 122, 123, 146, 149, 166, 168, 177, 178, 179, 184, 185, 202, 206, 207, 254, 255, 257, 260, 264, and 272; blue pigments such as C.I. Pigment Blue 1, 2, 3, 15, 15:1, 15:2, 15:3, 15:4, 15:6, 16, 22, 25, 60, 66, and 80; violet pigments such as C.I. Pigment Violet 19, 23, 29, 37, 38, and 50; orange to brown pigments such as C.I. Pigment Orange 13, 16, 36, 34, 43, 68, 69, 71, and 73; green pigments such as C.I. Pigment Green 7, 36, and 54; and black pigments such as C.I. Pigment Black 1.

Examples of extender pigments include silica, calcium carbonate, talc, clay, barium sulfate, and white carbon. Although these extender pigments may be used alone, they are typically used in combination with inorganic or organic pigments.

These pigments are typically used alone. However, a combination of two or more pigments may be used if necessary. Examples of such combinations include combinations of organic pigments and extender pigments and combinations of organic pigments and inorganic pigments. To control fluidity, organic and inorganic pigments may be used in combination with extender pigments. To adjust the hue of dyed articles, two or more pigments selected from organic and inorganic pigments may be used in combination. This hue adjustment is intended, for example, to obtain a dyed article with different shades of color or to extend the range of colors available for dyeing. For such purposes, several organic pigments may be used in combination to achieve the desired hue.

The content of the pigment is preferably 1.5 mass% to 15.0 mass%, more preferably 2.0 mass% to 14.0 mass%, and further preferably 2.5 mass% to 13.0 mass% with respect to the total mass (100 mass%) of the ink composition.

[Resin emulsion]

Examples of the resin emulsion contained in the water-based ink composition include emulsions formed from styrene-butadiene resin, (meth)acrylic resin, (meth)acrylic resin copolymer, styrene-maleic anhydride copolymer resin, epoxy resin, urethane resin, polyether resin, polyamide resin, unsaturated polyester resin, phenol resin, silicone resin, fluorine resin, polyvinyl resin (vinyl chloride, vinyl acetate, polyvinyl alcohol, etc.), vinyl acetate-(meth)acrylic copolymer resin, vinyl acetate-ethylene copolymer resin, alkyd resin, polyester resin, and amino resin (melanin resin, ureaformaldehyde resin, urea resin, melanin-formaldehyde resin, etc.). The resin emulsion may contain two or more resins. The two or more resins may form a core/shell structure. These resin emulsions may be used singly or in combination of two or more. Among these resin emulsions, styrene-butadiene resin emulsion, (meth)acrylic resin emulsion, (meth)acrylic resin copolymer emulsion, and urethane resin emulsion are preferable from the viewpoint of the ink performance.

The styrene-butadiene resin emulsion is often sold in the form of latex (emulsion) for example, and can be easily purchased. Specific examples thereof include Nipol LX415M, Nipol LX432M, Nipol LX433C, Nipol LX421, Nipol 2507H, and Nipol LX303A (available from Zeon Corporation), and latexes of grades 0695, 0696, 0561, 0589, 0602, 2108, 0533, 0545, 0548, 0568, 0569, 0573, 0597C, and 0850Z (available from JSR Corporation). Most of them are liquids obtained by emulsifying resins with a solid content of 30% to 60%. As the styrene-butadiene resin, any of the foregoing latexes may be used. In particular, a carboxy-modified styrene-butadiene resin is preferable. Examples of such resins include Nipol LX415M, Nipol LX432M, Nipol LX433C, Nipol LX421, 0695, 0696, 0533, 0545, 0548, 0568, 0569, 0573, 0597C, and 0850Z. 0695, 0533, 0568, 0597C, 0850Z are preferable, and JSR0568 (available from JSR Corporation) is further preferable. These styrene-butadiene resins may be used singly or in combination of two or three.

The content of the styrene-butadiene resin emulsion is preferably 1 mass% to 30 mass%, more preferably 2 mass% to 20 mass%, and further preferably 3 mass% to 17 mass% with respect to the total mass of the ink composition.

(Meth)acrylic resin and (meth)acrylic resin copolymer emulsions are commercially available, and most of them are emulsified liquids with a solid content concentration of 30 mass% to 60 mass%. Examples thereof include The Nippon Synthetic Chemical Industry Co., Ltd.'s Mowinyl 966A, 6963, and 6960 (acrylic resin emulsion, all trade names), 6969D

and RA-033A4 (styrene/acrylic resin emulsion, all trade names), BASF SE's JONCRYL 7100, PDX-7370, and PDX-7341 (styrene/acrylic resin emulsion, all trade names), and DIC Corporation's VONCOAT EC-905EF, 5400EF, and CG-8400 (acrylic/styrene-based emulsion).

The content of the (meth)acrylic resin emulsion and (meth)acrylic resin copolymer emulsion is typically 1 mass% to 30 mass%, preferably 2 mass% to 20 mass%, and more preferably 3 mass% to 17 mass% with respect to the total mass of the ink composition.

The urethane resin emulsion is not limited, and may be a known urethane resin emulsion.

Examples thereof include emulsions of polyurethane resins such as polyether-based urethane resins, polycarbonate-based urethane resins, and polyester-based urethane resins. Emulsions of polyether-based urethane resins and polycarbonate-based urethane resins are preferable.

Urethane resin emulsions are commercially available, and most of them are emulsified liquids with a solid content concentration of 30 mass% to 60 mass%. Examples of commercially available products of urethane resin emulsions include PERMARIN UA-150, 200, 310, 368, and 3945, UCOAT UX-320 and 340 (available from Sanyo Chemical Industries, Ltd.); HYDRAN WLS-201, 202, 210, 213, 221, 230, 250, and HW-312B latexes (available from DIC Corporation); and SUPERFLEX 150, 170, and 470 (available from DKS Co. Ltd.). Among these, examples of polycarbonate-based urethane resins include PERMARIN UA-310, and 3945; UCOAT UX-320; and HYDRAN WLS-210, 213, and 250, and examples of polyether-based urethane resins include PERMARIN UA-150, and 200; UCOAT UX-340; and HYDRAN WLS-201, 202, and 230. These urethane resins may be used singly or in combination of two or three.

In the case where the urethane resin in the urethane resin emulsion contains an acidic group such as a carboxy group, a sulfo group, or a hydroxyl group, the acidic group may be converted to an alkali salt. For example, the acidic group can be converted to the alkali salt by adding the urethane resin containing the acidic group to water and stirring them to prepare a water solution and adding an alkaline compound to the water solution to adjust the pH to 6.0 to 12.0. Examples of the alkaline compound include alkali metal hydroxides such as lithium hydroxide, sodium hydroxide, and potassium hydroxide; and alkaline earth metal hydroxides such as beryllium hydroxide, magnesium hydroxide, calcium hydroxide, and strontium hydroxide. These alkaline compounds may be used singly or in combination of two or more.

The glass transition temperature of the urethane resin is preferably - 90°C to 0°C, more preferably -85°C to -20°C, and further preferably -85°C to -30°C. A urethane resin whose glass transition temperature is more than 0°C is not preferable because the texture of the printed matter becomes hard. If the glass transition temperature is less than -90°C, the coating film of the printed matter tends to be tacky due to strong adhesion, and also the washing fastness is poor. The glass transition temperature is therefore preferably - 90°C or more. The glass transition temperature can be measured, for example, by a differential scanning calorimeter (DSC).

The urethane resin is preferably a urethane resin having a freezing point of -8°C or less. A freezing point of -8°C or less means that the material freezes or solidifies at -8°C or less, that is, it does not undergo denaturation such as gelation and returns to an emulsion state when the temperature returns to room temperature. The use of a urethane resin having a freezing point of -8°C or less makes it possible to obtain a white ink composition excellent in low-temperature storage stability. The freezing point is more preferably -11°C or less. The freezing point can be measured, for example, by placing 30 cc of the urethane resin emulsion in a 50 cc polyethylene bottle, allowing it to stand still for 20 hours in a constant temperature bath at a predetermined temperature, and then checking whether the urethane resin emulsion has frozen.

The content of the urethane resin emulsion is typically 1 mass% to 30 mass%, preferably 2 mass% to 20 mass%, and more preferably 3 mass% to 17 mass% with respect to the total mass of the ink composition.

[Water-soluble organic solvent]

In one embodiment, the water-based ink composition contains a water-soluble organic solvent. Examples of the water-soluble organic solvent include C1-C4 monools such as methanol, ethanol, n-propanol, isopropanol, n-butanol, isobutanol, sec-butanol, and tert-butanol; C2-C6 diols such as ethylene glycol, 1,2-propylene glycol, 1,3-propylene glycol, 1,2-butylene glycol, 1,4-butylene glycol, 1,3-pentanediol, 1,5-pentanediol, 1,2-hexanediol, and 1,6-hexanediol; C3-C6 triols such as glycerol, hexane-1,2,6-triol, and trimethylolpropane; carboxamides such as N,N-dimethylformamide and N,N-dimethylacetamide; heterocyclic ureas such as 2-pyrrolidone, N-methyl-2-pyrrolidone, 1,3-dimethylimidazolidin-2-one, and 1,3-dimethylhexahydropyrimid-2-one; ketones and keto alcohols such as acetone, methyl ethyl ketone, and 2-methyl-2-hydroxypentan-4-one; linear and cyclic ethers such as 1,2-dimethoxyethane, tetrahydrofuran, and dioxane; C2-C3 di- and trialkylene glycols and thioglycols such as diethylene glycol, triethylene glycol, dipropylene glycol, and thiodiglycol; C2-C3 polyalkylene glycols comprising four or more repeat units and having a molecular weight of about 20,000 or less (preferably in liquid form) such as tetraethylene glycol, polyethylene glycol (preferably those having molecular weights of 2,000 or less, e.g. 400, 800, or 1,540), and polypropylene glycol; polyglyceryl ethers such as diglycerol, triglycerol, and polyglycerol; C2-C3 polyoxyalkylene polyglyceryl ethers such as polyoxyethylene polyglyceryl ether and polyoxypropylene polyglyceryl ether; C1-C4 alkyl ethers of polyhydric alcohols, such as ethylene glycol monomethyl ether, ethylene glycol monoethyl ether, diethylene glycol monomethyl ether, diethylene glycol monoethyl ether, diethylene glycol monobutyl ether (butyl carbitol), triethylene glycol monomethyl ether, triethylene glycol monoethyl ether, and triethylene glycol monobutyl ether; cyclic esters and carbonates such as γ-butyrolactone and ethylene carbonate; dimethyl sulfoxide; and acetic acid.

Preferred among these are C2-C6 diols (particularly 1,2-propylene glycol); C3-C6 triols (particularly glycerol); polyglyceryl ethers (particularly diglycerol); and C1-C4 alkyl ethers of polyhydric alcohols (particularly butyl carbitol).

These water-soluble organic solvents may be used singly or in combination of two or more. Among these, it is preferred to use a polyglyceryl ether (preferably glycerin and/or diglycerin).

The content of the water-soluble organic solvent is preferably 10 mass% to 50 mass%, more preferably 14 mass% to 45 mass%, and further preferably 16 mass% to 35 mass% with respect to the total mass (100 mass%) of the ink composition. As a result of the content of the water-soluble organic solvent being in the foregoing range, ejection failures tend to be reduced favorably.

[Surfactant]

Examples of the surfactant contained in the water-based ink composition include known surfactants such as anionic, cationic, nonionic, amphoteric, silicone-based, and fluorine-based surfactants. Examples of the anionic surfactant include alkyl sulfonate salts, alkylcarboxylate salts, α-olefin sulfonate salts, polyoxyethylene alkyl ether acetate salts, N-acylamino acid or salts thereof, N-acylmethyltaurine salts, alkylsulfate salt polyoxyalkyl ether sulfate salts, alkylsulfate salt polyoxyethylene alkyl ether phosphate salts, rosin acid soap, castor oil sulfate ester salts, lauryl alcohol sulfate ester salts, alkylphenol-type phosphate esters, alkyl-type phosphate esters, alkylarylsulfonate salts, diethyl sulfosuccinate salts, diethylhexyl sulfosuccinate salts, and dioctyl sulfosuccinate salts. Specific examples of commercially available products include HYTENOL LA-10, LA-12, and LA-16, and NEOHYTENOL ECL-30S and ECL-45, all of which are available from DKS Co. Ltd. Examples of the cationic surfactant include 2-vinylpyridine derivatives and poly(4-vinylpyridine) derivatives. Examples of the nonionic surfactant include ethers such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ethers; esters such as polyoxyethylene oleate, polyoxyethylene distearate, sorbitan laurate, sorbitan monostearate, sorbitan monooleate, sorbitan sesquioleate, polyoxyethylene monooleate, and polyoxyethylene stearate; acetylene glycols (alcohols) such as 2,4,7,9-tetramethyl-5-decyne-4,7-diol, 3,6-dimethyl-4-octyne-3,6-diol, and 3,5-dimethyl-1-hexyn-3-ol; and SURFYNOL 104, 105, 82, 465, and OLFINE STG (trade names) available from Nissin Chemical Industry Co., Ltd.; and polyglycol ethers (e.g. Tergitol 15-S-7 available from Sigma-Aldrich). Examples of the amphoteric surfactant include lauryldimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, and imidazoline derivatives. Examples of the silicone-based surfactant include polyether modified siloxane and polyether modified polydimethylsiloxane. Specific examples of commercially available products include BYK-347 (polyether-modified siloxane); and BYK-345 and BYK-348 (polyether-modified polydimethylsiloxane), all of which are available from Byk-Chemie GmbH. Examples of the fluorine-based surfactant include perfluoroalkyl sulfonate compounds, perfluoroalkyl carboxylate-based compounds, perfluoroalkyl phosphate compounds, perfluoroalkyl ethylene oxide adducts, and polyoxyalkylene ether polymeric compounds each having a perfluoroalkylether group in its side chain. Specific examples of commercially available products include Zonyl TBS, FSP, FSA, FSN-100, FSN, FSO-100, FSO, FS-300, Capstone FS-30, and FS-31 (available from DuPont); and PF-151N and PF-154N (available from Omnova Solutions Inc.).

[Polymeric dispersant]

In one embodiment, the water-based ink composition preferably contains a polymeric dispersant.

A typical method of stabilizing a pigment dispersoid in an aqueous medium uses a dispersant such as a resin to stabilize the pigment dispersoid entropically or by ionic repulsion, steric repulsion, etc. The dispersant has a hydrophilic portion and a hydrophobic portion, and it is believed that the hydrophobic portion adsorbs to the surface of the pigment and the hydrophilic portion disperses the pigment in the aqueous medium. It is also possible to dissolve the pigment in the aqueous medium depending on the state of adsorption to the surface of the pigment. The polymeric dispersant can be used as a dispersant having such properties.

The polymeric dispersant is a polymer containing at least two constituent monomers selected from the group consisting of monomer A, monomer B, and monomer C represented by the following formula (1). Preferably, at least one each of monomer A, monomer B, and monomer C is selected.

Monomer A: A monomer in which R is a hydrogen atom in the following formula (1).

Monomer B: A monomer in which R is a C1-C4 alkyl group in the following formula (1).

Monomer C: A monomer in which R is an aryl group or an aryl C1-C4 alkyl group in the following formula (1),

preferably a monomer in which R is an aryl group, and more preferably a monomer in which R is a benzyl group.

[Chem. 3]

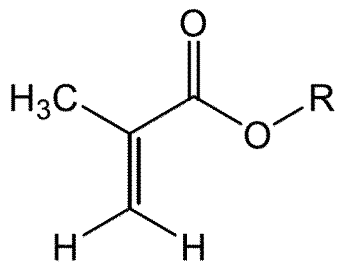

(1)

The polymeric dispersant may be any of random copolymers, alternating copolymers, block copolymers, and graft copolymers of these monomers.

The mass average molecular weight of the polymeric dispersant is typically 10000 to 60000, preferably 10000 to 40000, and more preferably 10000 to 30000. If the mass average molecular weight is in the foregoing range, the stability of the pigment dispersion is improved.

The acid value of the polymeric dispersant is typically 50 to 300, preferably 90 to 200, and more preferably 100 to 150 in units of mgKOH/g. An extremely low acid value may result in decreased solubility of the polymeric dispersant in water or an aqueous medium, whereas an extremely high acid value may result in poor color development.

Examples of the polymeric dispersant include HIROS X VS-1202 (a random polymer consisting of methyl methacrylate, butyl methacrylate, and methacrylic acid and having an acid value of 140 mgKOH/g and a mass average molecular weight of 11000) available from Seiko PMC Corporation.

The polymeric dispersant may be used after neutralizing its acid value, if necessary. The degree of neutralization with the theoretical equivalent of the acid value of the polymeric dispersant is 100%. The degree of neutralization of the polymeric dispersant in the ink composition is typically 50% to 200%, preferably 80% to 150%, and more preferably about 100% to 120%.

Examples of neutralizing agents used for neutralizing the polymeric dispersant include alkali metal hydroxides, alkaline earth metal hydroxides, inorganic bases such as ammonia, and organic bases such as aliphatic amine compounds and alkanolamine compounds.

Examples of the alkali metal hydroxides include lithium hydroxide, sodium hydroxide, and potassium hydroxide.

Examples of the alkaline earth metal hydroxides include beryllium hydroxide, magnesium hydroxide, calcium hydroxide, and strontium hydroxide.

Among the inorganic bases, alkali metal hydroxides and ammonia are preferable, and lithium hydroxide, sodium hydroxide, and ammonia are particularly preferable.

Examples of the alkanolamine compounds include mono, di, or tri C1-C3 alkanolamine compounds such as monoethanolamine, diethanolamine, triethanolamine, monopropanolamine, dipropanolamine, tripropanolamine, methylethanolamine, dimethylethanolamine, and N-methyldiethanolamine. Among these, tertiary amines are preferable, and triethanolamine is particularly preferable.

Examples of aliphatic amine compounds include mono, di, or tri C1-C3 amine compounds such as monomethylamine, dimethylamine, trimethylamine, monoethylamine, dimethylamine, and trimethylamine. Among these, triethylamine is preferable.

These neutralizers may be used singly or in combination of two or more.

[Monomer A]

Monomer A is a monomer in which R is a hydrogen atom in the formula (1), that is, methacrylic acid.

[Monomer B]

Monomer B is a monomer in which R is a C1-C4 alkyl group in the formula (1). Examples of monomer B include methyl methacrylate, ethyl methacrylate, n-propyl methacrylate, isopropyl methacrylate, n-butyl methacrylate, and isobutyl methacrylate.

[Monomer C]

Monomer C is a monomer in which R is an aryl group or an aryl C1-C4 alkyl group in the formula (1).
The aryl is preferably a C6-C10 aryl group, and more preferably a phenyl group or a naphthyl group.
Examples of the aryl C1-C4 alkyl group include phenyl C1-C4 alkyl groups having a linear or branched and preferably linear alkyl moiety in phenyl methyl, phenyl ethyl, phenyl propyl, phenyl butyl, and the like; and naphthyl C1-C4 alkyl groups having a linear or branched and preferably linear alkyl moiety in naphthylmethyl, naphthylethyl, naphthylpropyl, naphthylbutyl, and the like. Among these, phenyl C1-C4 alkyl groups are preferable. Specific examples of monomer C include phenyl methacrylate, benzyl methacrylate, and phenethyl methacrylate.
The content of the polymeric dispersant is typically 0.1 mass% to 15.0 mass%, preferably 0.1 mass% to 9.0 mass%, and more preferably 0.2 mass% to 6.0 mass% with respect to the total mass (100 mass%) of the ink composition.

[Resin]

In one embodiment, the water-based ink composition preferably further contains at least one selected from the group consisting of urethane resins, styrene-butadiene resins, (meth)acrylic resins, and (meth)acrylic resin copolymers.
In particular, a water-based ink composition containing water, a pigment, and a polymeric dispersant preferably further contains at least one selected from the group consisting of urethane resins, styrene-butadiene resins, (meth)acrylic resins, and (meth)acrylic resin copolymers.
The resins may be used singly or in combination of two or more. Among these resins, urethane resins and styrene-butadiene resins are preferable from the viewpoint of ink performance.
Examples of the urethane resin used in the water-based ink composition include those listed for the white ink composition. These urethane resins may be used singly or in combination of two or three.
In the case where the urethane resin contains an acidic group such as a carboxy group, a sulfo group, or a hydroxyl group, the acidic group may be converted to an alkali salt. For example, the acidic group can be converted to the alkali salt by adding the urethane resin containing the acidic group to water and stirring them to prepare a water solution and adding an alkaline compound to the water solution to adjust the pH to 6.0 to 12.0. Examples of the alkaline compound include alkali metal hydroxides such as lithium hydroxide, sodium hydroxide, and potassium hydroxide; and alkaline earth metal hydroxides such as beryllium hydroxide, magnesium hydroxide, calcium hydroxide, and strontium hydroxide. These alkaline compounds may be used singly or in combination of two or more.
The content of the urethane resin is typically 1 mass% to 30 mass%, preferably 2 mass% to 20 mass%, and more preferably 3 mass% to 17 mass% with respect to the total mass of the ink composition.
The styrene-butadiene resin is often sold in the form of latex (emulsion) for example, and can be easily purchased. Specific examples thereof include Nipol LX415M, Nipol LX432M, Nipol LX433C, Nipol LX421, Nipol 2507H, and Nipol LX303A (available from Zeon Corporation), and latexes of grades 0695, 0696, 0561, 0589, 0602, 2108, 0533, 0545, 0548, 0568, 0569, 0573, 0597C, and 0850Z (available from JSR Corporation). Most of them are liquids obtained by emulsifying resins with a solid content of 30% to 60%. As the styrene-butadiene resin, any of the foregoing latexes may be used. In particular, a carboxy-modified styrene-butadiene resin is preferable. Examples of such resins include Nipol LX415M, Nipol LX432M, Nipol LX433C, Nipol LX421, 0695, 0696, 0533, 0545, 0548, 0568, 0569, 0573, 0597C, and 0850Z. 0695, 0533, 0568, 0597C, 0850Z are preferable, and JSR 0568 (available from JSR Corporation) is further preferable. These styrene-butadiene resins may be used singly or in combination of two or three.
The content of the styrene-butadiene resin is typically 1 mass% to 30 mass%, preferably 2 mass% to 20 mass%, and more preferably 3 mass% to 17 mass% with respect to the total mass of the ink composition.
(Meth)acrylic resins and (meth)acrylic resin copolymers are commercially available, and most of them are emulsified liquids with a solid content concentration of 30 mass% to 60 mass%. Examples thereof include The Nippon Synthetic Chemical Industry Co., Ltd.'s Mowinyl 966A, 6963, and 6960 (acrylic resin emulsion, all trade names), 6969D and RA-033A4 (styrene/acrylic resin emulsion, all trade names), BASF SE's JONCRYL 7100, PDX-7370, and PDX-7341 (styrene/acrylic resin emulsion, all trade names), and DIC Corporation's VONCOAT EC-905EF, 5400EF, and CG-8400 (acrylic/styrene-based emulsion).
The content of the (meth)acrylic resin and (meth)acrylic resin copolymer is typically 1 mass% to 30 mass%, preferably 2 mass% to 20 mass%, and more preferably 3 mass% to 17 mass% with respect to the total mass of the ink composition.

[Additives]

The ink composition may further contain additives.
Examples of the additives include an antiseptic, a chelating reagent, an anti-rust agent, a water-soluble ultraviolet absorber, a water-soluble polymeric compound, a viscosity adjuster, a pigment solubilizer, an anti-fading agent, and an

antioxidant.

-- Antiseptic --

Examples of the antiseptic in the additives include compounds such as organic sulfur-based, organic nitrogen sulfur-based, organic halogen-based, haloallylsulfone-based, iodopropargyl-based, N-haloalkylthio-based, nitrile-based, pyridine-based, 8-oxyquinoline-based, benzothiazole-based, isothiazolin-based, dithiol-based, pyridine oxide-based, nitropropane-based, organic tin-based, phenol-based, quaternary ammonium salt-based, triazine-based, thiazine-based, anilide-based, adamantane-based, dithiocarbamatebased, brominated indanone-based, benzyl bromoacetate-based, and inorganic salt-based. Specific examples of the organic halogen-based compound include sodium pentachlorophenol. Specific examples of the pyridine oxide-based compound include sodium 2-pyridinethiol-1-oxide. Specific examples of the isothiazolin-based compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Specific examples of other antiseptic antifungal agents include sodium acetate anhydride, sodium sorbate, sodium benzoate, and PROXEL® GXL(S) (PROXEL is a registered trademark in Japan, other countries, or both) and PROXEL® XL-2(S) (trade name) available from Arch Chemicals, Inc.

-- Chelating reagent --

Specific examples of the chelating reagent in the additives include sodium ethylenediaminetetraacetate, sodium nitrilotriacetate, sodium hydroxyethylethylenediaminetriacetate, sodium diethylenetriaminepentaacetate, and sodium uracil diacetate.

-- Anti-rust agent --

Examples of the anti-rust agent in the additives include acid sulfite, sodium thiosulfate, ammonium thioglycolate, diisopropylammonium nitrite, pentaerythritol tetranitrate, and dicyclohexylammonium nitrite.

-- Water-soluble ultraviolet absorber --

Examples of the water-soluble ultraviolet absorber in the additives include sulfonated benzophenone-based compounds, benzotriazole-based compounds, salicylic acid-based compounds, cinnamic acid-based compounds, and triazine-based compounds.

-- Water-soluble polymeric compound --

Examples of the water-soluble polymeric compound in the additives include polyvinyl alcohols, cellulose derivatives, polyamines, and polyimines.

-- Viscosity adjuster --

Examples of the viscosity adjuster in the additives include the water-soluble organic solvents and water-soluble polymeric compounds described in the section on the water-based ink composition. Examples of the water-soluble polymeric compounds include polyvinyl alcohols, cellulose derivatives, polyamines, and polyimines.

-- Pigment solubilizer --

Examples of the pigment solubilizer in the additives include urea, ε-caprolactam, and ethylene carbonate.

-- Anti-fading agent --

The anti-fading agent in the additives is used for the purpose of improving the storage stability of images. Examples of the anti-fading agent include various organic-based and metal complex-based anti-fading agents. Examples of the organic-based anti-fading agents include hydroquinones, alkoxyphenols, dialkoxyphenols, phenols, anilines, amines, indanes, chromans, alkoxyanilines, and heterocycles. Examples of the metal complex-based anti-fading agents include nickel complexes and zinc complexes.

-- Antioxidant --

Examples of the antioxidant in the additives include various organic-based and metal complex-based anti-fading agents. Examples of the organic-based anti-fading agents include hydroquinones, alkoxyphenols, dialkoxyphenols, phenols, anilines, amines, indanes, chromans, alkoxyanilines, and heterocycles.

[Surface tension of water-based ink composition]

In one embodiment, the surface tension of the water-based ink composition at 25°C is preferably 20 mN/m to 48 mN/m, more preferably 25 mN/m to 46 mN/m, further preferably 30 mN/m to 44 mN/m, and particularly preferably 32 mN/m to 42 mN/m, from the viewpoint of exhibiting sufficient wettability to various fabrics.

The surface tension of the water-based ink composition suitable for use in combination with the below-described water-based white ink composition at 25°C is preferably 20 mN/m to 48 mN/m, more preferably 25 mN/m to 44 mN/m, further preferably 30 mN/m to 42 mN/m, and particularly preferably 32 mN/m to 40 mN/m, from the viewpoint of exhibiting sufficient wettability to various fabrics.

The surface tension of the water-based ink composition can be measured by the platinum plate method in a 25°C environment using, for example, a surface tensiometer (CBVPZ available from Kyowa Interface Science Co., Ltd.).

[Viscosity of water-based ink composition]

The viscosity of the water-based ink composition at 25°C is preferably 2 mPa·s to 20 mPa·s and more preferably 3 mPa·s to 18 mPa·s. If the water-based ink composition satisfies the foregoing viscosity range, the ejection responsiveness at high-speed printing tends to be good.

[pH of water-based ink composition]

The pH of the water-based ink composition is preferably 5.0 to 11.0 and more preferably 7.0 to 10.0, for the purpose of improving the storage stability.

[Preparation method for water-based ink composition]

The preparation method for the water-based ink composition is not limited, and is, for example, a method in which an aqueous dispersion (pigment dispersion) containing each of the foregoing components is prepared and optionally additives such as a water-soluble organic solvent are further added.

Examples of the method of preparing the aqueous dispersion include those using a sand mill (bead mill), a roller mill, a ball mill, a paint shaker, a sonicator, a microfluidizer, etc., together with a pigment, a dispersant (e.g. the foregoing polymeric dispersant, resin, etc.), water, or an aqueous solvent. Among these, a sand mill (bead mill) is preferable. It is also preferable to prepare a pigment dispersion using a sand mill (bead mill) under conditions with improved dispersion efficiency, for example, using beads small in diameter (about 0.01 mm to 1 mm in diameter) to increase the filling factor of the beads. A pigment dispersion prepared under such conditions has a small pigment particle size and thus has good dispersibility. It is also preferred to remove components large in particle size from the prepared dispersion, for example, by filtration and/or centrifugation. For example, when foaming occurs actively during the preparation of the dispersion, an extremely small amount of anti-foaming agent, such as a silicone or acetylene glycol anti-foaming agent, may be added in order to inhibit such foaming. Since some anti-foaming agents interfere with the dispersion and atomization of the pigment, it is preferred to appropriately select and use an anti-foaming agent that does not have such adverse effects.

The dispersant may be in a state of adsorbing to part of the surface of the pigment, or in a state of covering the entire surface of the pigment (referred to as a microencapsulated pigment, for example). The latter is preferred. A polymeric dispersant is preferable as the dispersant for the pigment, as mentioned above.

In the case of covering the entire surface of the pigment with the dispersant (also referred to as microencapsulating the pigment), any known microencapsulation method may be used. Such methods are generally divided into two types: physical/mechanical methods and chemical methods. Examples of chemical methods that have been proposed include surface precipitation, kneading, and interfacial polymerization (also referred to as surface polymerization). Surface precipitation methods include acid precipitation and phase inversion emulsification. Any of these methods may be used for microencapsulation, with there being no limitation. Among these, surface precipitation is preferable, and phase inversion emulsification is particularly preferable.

An example of phase inversion emulsification is a method in which a solution of a hydrophobic organic solvent in which a dispersant is dissolved is mixed with a liquid containing a neutralizer and water to form an emulsified liquid

(emulsion or microemulsion), a pigment is further added and mixed/dispersed, and then the solvent is removed to obtain an aqueous pigment dispersion. The average particle size of the pigment in the pigment dispersion prepared as described above is typically 200 nm or less, preferably 50 nm to 150 nm, and more preferably 60 nm to 120 nm. As a result of the average particle size being in the foregoing range, not only excellent dispersion stability and ejection stability are achieved but also the dyeing density is enhanced. The average particle size can be measured by laser light scattering.

The water-based ink composition may be subjected to microfiltration using a membrane filter or the like. In particular, when the water-based ink composition is used as an ink for inkjet textile printing, it is preferable to perform microfiltration for the purpose of preventing clogging or the like of the nozzle. The pore size of the filter used for microfiltration is typically 0.1 μm to 1 μm, and preferably 0.1 μm to 0.8 μm.

In the case where the foregoing polymeric dispersant is used as the dispersant, the content of the polymeric dispersant can be represented by a numerical value called a part ratio. The part ratio can be determined by the following formula:

$$\text{Part ratio} = (\text{the number of parts of dispersant})/(\text{the number of parts of pigment}).$$

In this embodiment, the part ratio is typically 0.1 to 1.0, preferably 0.1 to 0.6, and more preferably 0.2 to 0.4. If the part ratio is in the foregoing range, a highly stable pigment dispersion and a good dyed article can be obtained.

<Water-based white ink composition>

The water-based white ink composition contains water, a white pigment, a urethane resin, and a water-soluble organic solvent. In this specification, the "water-based white ink composition" may be abbreviated as "white ink composition" or "white ink".

[Water]

As the water contained in the white ink composition, for example, any of the examples described for the pretreatment composition above may be used. The content of the water is not limited and may be determined as appropriate, but may be 20 mass% to 80 mass% with respect to the total mass (100 mass%) of the white ink composition in order to adjust the viscosity of the white ink composition to the suitable range. For example, the content of the water is preferably 40 mass% to 80 mass%, more preferably 45 mass% to 75 mass%, and further preferably 50 mass% to 70 mass%, without being limited thereto.

[White pigment]

Preferred white pigments include metal oxides. Examples of metal oxides include zinc oxide, titanium oxide, and zirconium oxide. Titanium oxide is preferable. Examples of titanium oxide include rutile type and anatase type. Titanium oxide may be directly used in powder form or may be surface-treated with other materials such as silicon dioxide, aluminum oxide, zirconium oxide, zinc oxide, and hydroxy group-comprising organic compounds. Preferred among these is surface-treated titanium oxide.

Specific examples of titanium oxide include DUAWHITE TCR-52, TITONE R-32, TITONE R-7E, TITONE R-21, TITONE R-62N, and TITONE R-42 (available from Sakai Chemical Industry Co., Ltd.); TIPAQUE CR-50, TIPAQUE CR-50-2, TIPAQUE CR-58, TIPAQUE CR-60, TIPAQUE CR-80, and TIPAQUE CR-90 (available from Ishihara Sangyo Kaisha, Ltd.); TITANIX JA-600A and TITANIX JR-605 (available from Tayca Corporation); and ST-455, ST-455WB, ST-457SA, and ST-457EC (available from Titan Kogyo, Ltd.).

The content of the white pigment is preferably 3.0 mass% to 16.0 mass%, more preferably 4.0 mass% to 15.0 mass%, and further preferably 5.0 mass% to 14.0 mass% with respect to the total mass (100 mass%) of the white ink composition.

The urethane resin is not limited, and may be a known urethane resin.

Specific examples of the urethane resin include polyurethane resins such as polyether-based urethane resins, polycarbonate-based urethane resins, and polyester-based urethane resins. Polyether-based urethane resins and polycarbonate-based urethane resins are preferable.

Urethane resins are commercially available, and most of them are emulsified liquids with a solid content concentration of 30 mass% to 60 mass%. Examples of commercially available products of urethane resins include PERMARIN UA-150, 200, 310, 368, and 3945, UCOAT UX-320 and 340 (available from Sanyo Chemical Industries, Ltd.); HYDRAN WLS-201, 202, 210, 213, 221, 230, 250, and HW-312B latexes (available from DIC Corporation); and SUPERFLEX 150, 170, and 470 (available from DKS Co. Ltd.). Among these, examples of polycarbonate-based urethane resins include PERMARIN UA-310, and 3945; UCOAT UX-320; and HYDRAN WLS-210, 213, and 250, and examples of polyether-based urethane resins include PERMARIN UA-150, and 200; UCOAT UX-340; and HYDRAN WLS-201, 202, and 230. These urethane resins may be used singly or in combination of two or three.

The glass transition temperature of the urethane resin is preferably - 90°C to 0°C, more preferably -85°C to -20°C, and further preferably -85°C to -30°C. A urethane resin whose glass transition temperature is more than 0°C is not preferable because the texture of the printed matter becomes hard. If the glass transition temperature is less than -90°C, the coating film of the printed matter tends to be tacky due to strong adhesion, and also the washing fastness is poor. The glass transition temperature is therefore preferably - 90°C or more. The glass transition temperature can be measured, for example, by a differential scanning calorimeter (DSC).

The urethane resin is preferably a urethane resin having a freezing point of -8°C or less. A freezing point of -8°C or less means that the material freezes or solidifies at -8°C or less, that is, it does not undergo denaturation such as gelation and returns to an emulsion state when the temperature returns to room temperature. The use of a urethane resin having a freezing point of -8°C or less makes it possible to obtain a white ink composition excellent in low-temperature storage stability. The freezing point is more preferably -11°C or less. The freezing point can be measured, for example, by placing 30 cc of the urethane resin emulsion in a 50 cc polyethylene bottle, allowing it to stand still for 20 hours in a constant temperature bath at a predetermined temperature, and then checking whether the urethane resin emulsion has frozen.

The content of the urethane resin is typically 1 mass% to 30 mass%, preferably 2 mass% to 20 mass%, and more preferably 3 mass% to 17 mass% with respect to the total mass of the white ink composition.

[Water-soluble organic solvent]

The white ink composition contains a water-soluble organic solvent. Examples of the water-soluble organic solvent include C1-C4 monools such as methanol, ethanol, n-propanol, isopropanol, n-butanol, isobutanol, sec-butanol, and tert-butanol; C2-C6 diols such as ethylene glycol, 1,2-propylene glycol, 1,3-propylene glycol, 1,2-butylene glycol, 1,4-butylene glycol, 1,3-pentanediol, 1,5-pentanediol, 1,2-hexanediol, and 1,6-hexanediol; C3-C6 triols such as glycerol, hexane-1,2,6-triol, and trimethylolpropane; carboxamides such as N,N-dimethylformamide and N,N-dimethylacetamide; heterocyclic ureas such as 2-pyrrolidone, N-methyl-2-pyrrolidone, 1,3-dimethylimidazolidin-2-one, and 1,3-dimethylhexahydropyrimid-2-one; ketones and keto alcohols such as acetone, methyl ethyl ketone, and 2-methyl-2-hydroxypentan-4-one; linear and cyclic ethers such as 1,2-dimethoxyethane, tetrahydrofuran, and dioxane; C2-C3 di- and trialkylene glycols and thioglycols such as diethylene glycol, triethylene glycol, dipropylene glycol, and thiodiglycol; C2-C3 polyalkylene glycols comprising four or more repeat units and having a molecular weight of about 20,000 or less (preferably in liquid form) such as tetraethylene glycol, polyethylene glycol (preferably those having molecular weights of 2,000 or less, e.g. 400, 800, or 1,540), and polypropylene glycol; polyglyceryl ethers such as diglycerol, triglycerol, and polyglycerol; C2-C3 polyoxyalkylene polyglyceryl ethers such as polyoxyethylene polyglyceryl ether and polyoxypropylene polyglyceryl ether; C1-C4 alkyl ethers of polyhydric alcohols, such as ethylene glycol monomethyl ether, ethylene glycol monoethyl ether, diethylene glycol monomethyl ether, diethylene glycol monoethyl ether, diethylene glycol monobutyl ether (butyl carbitol), triethylene glycol monomethyl ether, triethylene glycol monoethyl ether, and triethylene glycol monobutyl ether; cyclic esters and carbonates such as γ-butyrolactone and ethylene carbonate; dimethyl sulfoxide; and acetic acid.

Preferred among these are C2-C6 diols (particularly 1,2-propylene glycol); C3-C6 triols (particularly glycerol); polyglyceryl ethers (particularly diglycerol); and C1-C4 alkyl ethers of polyhydric alcohols (particularly butyl carbitol).

These water-soluble organic solvents may be used singly or in combination of two or more. Among these, it is preferred to use a polyglyceryl ether (preferably glycerin and/or diglycerin).

The content of the water-soluble organic solvent is preferably 10 mass% to 50 mass%, more preferably 14 mass% to 45 mass%, and further preferably 16 mass% to 35 mass% with respect to the total mass (100 mass%) of the white ink composition. As a result of the content of the water-soluble organic solvent being in the foregoing range, ejection failures tend to be reduced favorably.

[Base]

The white ink composition preferably further contains a base. The base is not limited, and examples thereof include alkali hydroxide bases such as alkali metal hydroxides and alkaline earth metal hydroxides, inorganic bases such as ammonia, and organic bases such as aliphatic amine compounds and alkanolamine compounds.

Examples of the alkali metal hydroxides include lithium hydroxide, sodium hydroxide, and potassium hydroxide. Examples of the alkaline earth metal hydroxides include beryllium hydroxide, magnesium hydroxide, calcium hydroxide, and strontium hydroxide. Among the inorganic bases, alkali metal hydroxides and ammonia are preferable, lithium hydroxide, potassium hydroxide, sodium hydroxide, and ammonia are particularly preferable, and sodium hydroxide is

most preferable.

Examples of aliphatic amine compounds include mono, di, or tri C1-C3 amine compounds such as monomethylamine, dimethylamine, trimethylamine, monoethylamine, dimethylamine, and trimethylamine. Among these, triethylamine is preferable.

Examples of the alkanolamine compounds include mono, di, or tri C1-C3 alkanolamine compounds such as monoethanolamine, diethanolamine, triethanolamine, monopropanolamine, dipropanolamine, tripropanolamine, methylethanolamine, dimethylethanolamine, and N-methyldiethanolamine. Among these, tertiary amines are preferable, and diethanolamine and triethanolamine are further preferable.

Especially if the white ink composition contains sodium hydroxide as a base, the white ink composition has excellent whiteness and contrast ratio.

These bases may be used singly or in combination of two or more. In the case of using two or more bases, the blending ratio of each base may be set to any ratio according to the purpose.

[Additives]

The white ink composition may further contain additives.

Examples of the additives include an antiseptic, a surfactant, a chelating reagent, an anti-rust agent, a water-soluble ultraviolet absorber, a water-soluble polymeric compound, a viscosity adjuster, a pigment solubilizer, an anti-fading agent, and an antioxidant.

-- Antiseptic --

Examples of the antiseptic include compounds such as organic sulfur-based, organic nitrogen sulfur-based, organic halogen-based, haloallylsulfone-based, iodopropargyl-based, N-haloalkylthio-based, nitrile-based, pyridine-based, 8-oxyquinoline-based, benzothiazole-based, isothiazolin-based, dithiol-based, pyridine oxide-based, nitropropane-based, organic tin-based, phenol-based, quaternary ammonium salt-based, triazine-based, thiazine-based, anilide-based, adamantane-based, dithiocarbamate-based, brominated indanone-based, benzyl bromoacetate-based, and inorganic salt-based. Specific examples of the organic halogen-based compound include sodium pentachlorophenol. Specific examples of the pyridine oxide-based compound include sodium 2-pyridinethiol-1-oxide. Specific examples of the isothiazolin-based compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Specific examples of other antiseptic antifungal agents include sodium acetate anhydride, sodium sorbate, sodium benzoate, and PROXEL® GXL(S) (PROXEL is a registered trademark in Japan, other countries, or both) and PROXEL® XL-2(S) (trade name) available from Arch Chemicals, Inc.

-- Surfactant --

Examples of the surfactant include known surfactants such as anionic, cationic, nonionic, and silicone-based surfactants.

Examples of the anionic surfactant include alkyl sulfonate salts, alkylcarboxylate salts, $\alpha$-olefin sulfonate salts, polyoxyethylene alkyl ether acetate salts, N-acylamino acid or salts thereof, N-acylmethyltaurine salts, alkylsulfate salt polyoxyalkyl ether sulfate salts, alkylsulfate salt polyoxyethylene alkyl ether phosphate salts, rosin acid soap, castor oil sulfate ester salts, lauryl alcohol sulfate ester salts, alkylphenol-type phosphate esters, alkyl-type phosphate esters, alkylarylsulfonate salts, diethyl sulfosuccinate salts, diethylhexyl sulfosuccinate salts, and dioctyl sulfosuccinate salts. Specific examples of commercially available products include HYTENOL LA-10, LA-12, and LA-16, and NEOHYTENOL ECL-30S and ECL-45, all of which are available from DKS Co. Ltd.

Examples of the cationic surfactant include 2-vinylpyridine derivatives and poly(4-vinylpyridine) derivatives.

Examples of the amphoteric surfactant include lauryldimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, and imidazoline derivatives.

Examples of the nonionic surfactant include ethers such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ethers; esters such as polyoxyethylene oleate, polyoxyethylene distearate, sorbitan laurate, sorbitan monostearate, sorbitan monooleate, sorbitan sesquioleate, polyoxyethylene monooleate, and polyoxyethylene stearate; acetylene glycols (alcohols) such as 2,4,7,9-tetramethyl-5-decyne-4,7-diol, 3,6-dimethyl-4-octyne-3,6-diol, and 3,5-dimethyl-1-hexyn-3-ol; and SURFYNOL 104, 105, 82, 465, and OLFINE STG (trade names) available from Nissin Chemical Industry Co., Ltd.; and polyglycol ethers (e.g. Tergitol 15-S-7 available from Sigma-Aldrich).

Examples of the silicone-based surfactant include polyether modified siloxane and polyether modified polydimethylsiloxane. Specific examples of commercially available products include BYK-347 (polyether-modified siloxane); and BYK-345 and BYK-348 (polyether-modified polydimethylsiloxane), all of which are available from Byk-Chemie GmbH. Examples of the fluorine-based surfactant include perfluoroalkyl sulfonate compounds, perfluoroalkyl carboxylate-based compounds, perfluoroalkyl phosphate compounds, perfluoroalkyl ethylene oxide adducts, and polyoxyalkylene ether polymeric compounds each having a perfluoroalkylether group in its side chain. Specific examples of commercially available products include Zonyl TBS, FSP, FSA, FSN-100, FSN, FSO-100, FSO, FS-300, Capstone FS-30, and FS-31 (available from DuPont); and PF-151N and PF-154N (available from Omnova Solutions Inc.).

-- Chelating reagent --

Specific examples of the chelating reagent include sodium ethylenediaminetetraacetate, sodium nitrilotriacetate, sodium hydroxyethylethylenediaminetriacetate, sodium diethylenetriaminepentaacetate, and sodium uracil diacetate.

-- Anti-rust agent --

Examples of the anti-rust agent include acid sulfite, sodium thiosulfate, ammonium thioglycolate, diisopropylammonium nitrite, pentaerythritol tetranitrate, and dicyclohexylammonium nitrite.

-- Water-soluble ultraviolet absorber --

Examples of the water-soluble ultraviolet absorber include sulfonated benzophenone-based compounds, benzotriazole-based compounds, salicylic acid-based compounds, cinnamic acid-based compounds, and triazine-based compounds.

-- Water-soluble polymeric compound --

Examples of the water-soluble polymeric compound include polyvinyl alcohols, cellulose derivatives, polyamines, and polyimines.

-- Viscosity adjuster --

Examples of the viscosity adjuster include water-soluble organic solvents and water-soluble polymeric compounds. Examples thereof include polyvinyl alcohols, cellulose derivatives, polyamines, and polyimines.

-- Pigment solubilizer --

Examples of the pigment solubilizer include urea, ε-caprolactam, and ethylene carbonate.

-- Anti-fading agent --

The anti-fading agent is used for the purpose of improving the storage stability of images. Examples of the anti-fading agent include various organic-based and metal complex-based anti-fading agents. Examples of the organic-based anti-fading agents include hydroquinones, alkoxyphenols, dialkoxyphenols, phenols, anilines, amines, indanes, chromans, alkoxyanilines, and heterocycles. Examples of the metal complex-based anti-fading agents include nickel complexes and zinc complexes.

-- Antioxidant --

Examples of the antioxidant include various organic-based and metal complex-based anti-fading agents. Examples of the organic-based anti-fading agents include hydroquinones, alkoxyphenols, dialkoxyphenols, phenols, anilines, amines, indanes, chromans, alkoxyanilines, and heterocycles.

[Preparation method for water-based white ink composition]

The preparation method for the white ink composition according to this embodiment is, for example, a method in which an aqueous dispersion containing each of the foregoing components is prepared and optionally the foregoing additives are further added.

Examples of the method of preparing the aqueous dispersion include those using a sand mill (bead mill), a roller mill, a ball mill, a paint shaker, a sonicator, a microfluidizer, etc., together with a pigment, a dispersant, water, or an aqueous solvent. Among these, a sand mill (bead mill) is preferable. It is also preferable to prepare a pigment dispersion using a sand mill (bead mill) under conditions with improved dispersion efficiency, for example, using beads small in diameter (about 0.01 mm to 1 mm in diameter) to increase the filling factor of the beads. A pigment dispersion prepared under such conditions has a small pigment particle size and thus has good dispersibility. It is also preferred to remove components large in particle size from the prepared dispersion, for example, by filtration and/or centrifugation. For example, when foaming occurs actively during the preparation of the dispersion, an extremely small amount of anti-foaming agent, such as a silicone or acetylene glycol anti-foaming agent, may be added in order to inhibit such foaming. Since some anti-foaming agents interfere with the dispersion and atomization of the pigment, it is preferred to appropriately select and use an anti-foaming agent that does not have such adverse effects.

The dispersant may be in a state of adsorbing to part of the surface of the pigment, or in a state of covering the entire surface of the pigment (referred to as a microencapsulated pigment, for example). The latter is preferred.

In the case of covering the entire surface of the pigment with the dispersant (also referred to as microencapsulating the pigment), any known microencapsulation method may be used. Such methods are generally divided into two types: physical/mechanical methods and chemical methods. Examples of chemical methods that have been proposed include surface precipitation, kneading, and interfacial polymerization (also referred to as surface polymerization). Surface precipitation methods include acid precipitation and phase inversion emulsification. Any of these methods may be used for microencapsulation, with there being no limitation. Among these, surface precipitation is preferable, and phase inversion emulsification is particularly preferable.

An example of phase inversion emulsification is a method in which a solution of a hydrophobic organic solvent in which a dispersant is dissolved is mixed with a liquid containing a neutralizer and water to form an emulsified liquid (emulsion or microemulsion), a pigment is further added and mixed/dispersed, and then the solvent is removed to obtain an aqueous pigment dispersion. The average particle size of the pigment in the pigment dispersion prepared as described above is typically 200 nm or less, preferably 50 nm to 150 nm, and more preferably 60 nm to 120 nm. As a result of the average particle size being in the foregoing range, not only excellent dispersion stability and ejection stability are achieved but also the dyeing density is enhanced. The average particle size can be measured by laser light scattering.

The white ink composition may be subjected to microfiltration using a membrane filter or the like. In particular, when the water-based ink composition is used as an ink for inkjet textile printing, it is preferable to perform microfiltration for the purpose of preventing clogging or the like of the nozzle. The pore size of the filter used for microfiltration is typically 0.1 μm to 1 μm, and preferably 0.1 μm to 0.8 μm .

With the white ink composition according to this embodiment, it is possible to effectively prevent the particles in the ink composition from aggregating and increasing the average particle size during storage, and also from sedimenting during storage. Thus, with the white ink composition according to this embodiment, the dispersion state of the particles in the ink composition can be stably maintained.

The white ink composition according to this embodiment also has good initial filling property to an inkjet printer head and good continuous printing stability. Moreover, the white ink composition according to this embodiment enables obtainment of an image having high whiteness and hiding property without unevenness.

The viscosity of the white ink composition according to this embodiment at 25°C is preferably about 2 mPa·s to 20 mPa·s when measured with an E-type viscometer, from the viewpoint of ejection responsiveness at high-speed printing. The surface tension of the white ink composition according to this embodiment at 25°C is preferably about 20 mN/m to 45 mN/m when measured by a plate method. In practice, the physical properties are adjusted to appropriate values in consideration of the ejection volume, response speed, ink droplet flight characteristics, etc. of the inkjet printer to be used.

[Fabric]

The fabric used in this embodiment is not limited, and examples thereof include natural fibers and synthetic fibers such as silk, cotton, wool, cellulose, nylon, polyester, and rayon. The fabric may be a blend including two or more types of fibers.

<Print set>

The pretreatment composition is preferably used in combination with at least one water-based ink compositions in the form of a print set (also referred to as "ink set"). The components of the water-based ink composition included in the print set are as described above.

A print set according to an embodiment of the present disclosure includes: a pretreatment composition containing water, a cationic polymer, and a crosslinking agent; and a water-based white ink composition containing water, a white

pigment, a urethane resin, and a water-soluble organic solvent. The components of the water-based white ink composition included in the print set are as described above.

Conventionally, with the method of aggregating the resin in the ink composition using the pretreatment liquid, the resin in the ink composition aggregates and the pigment is kept from permeating into the fabric fiber, so that the color development can be improved. However, since the resin aggregates early before coming into contact with the medium to be recorded, the adhesiveness decreases. In view of this, the print set according to this embodiment contains a pretreatment composition containing a cationic polymer and a crosslinking agent, so that the adhesiveness can be improved while maintaining high color development.

In addition, in the case where the pretreatment composition is applied and then the ink composition is adhered to the fabric without drying the applied pretreatment composition in order to speed up printing, the decrease in adhesiveness mentioned above is more noticeable. With the print set according to this embodiment, however, the adhesiveness can be improved even in the case of speeding up printing in this way.

Moreover, in the case where, during printing, heating is performed without applying pressure to the surface of the fabric to which the ink composition is adhered in order to fix the ink composition while maintaining the texture of the fabric, the decrease in adhesiveness mentioned above is more noticeable than in the case where pressure is applied to the surface. With the print set according to this embodiment, however, the adhesiveness can be improved even in the case of using such a textile printing method.

[Inkjet textile printing method]

An inkjet textile printing method according to this embodiment comprises: a pretreatment step of applying a pretreatment composition to a fabric to form a wet precoat layer; and a step of applying a water-based ink composition to at least part of a region where the wet precoat layer is formed.

An inkjet textile printing method (hereafter also simply referred to as "textile printing method") according to a preferred embodiment of the present disclosure comprises: a pretreatment step of applying a pretreatment composition to a fabric to form a wet precoat layer; and a recording step of, without drying the fabric after the pretreatment step, adhering a water-based ink composition containing water, a pigment, a resin emulsion (resin fine particles), a water-soluble organic solvent, and a surfactant to at least part of a region where the wet precoat layer is formed by an inkjet method to form an image region.

There are two types of printing methods using pretreatment compositions: a wet-on-dry method in which the ink composition is adhered after applying and drying the pretreatment composition, and a wet-on-wet method in which the ink composition is adhered without drying the pretreatment composition. The wet-on-dry method is advantageous in that an image with high adhesion can be obtained, although the printing time is long due to drying.

The wet-on-wet method can shorten the printing time as drying is not performed, but has a problem in that, due to high moisture content, the ink components tend to not aggregate on the fabric fiber but aggregate in the moisture on the fabric away from the fiber and consequently the adhesiveness decreases.

The inkjet textile printing method according to this embodiment uses a pretreatment composition containing a cationic polymer and a crosslinking agent to thus improve the adhesiveness of the printed matter obtained by the wet-on-wet method and reduce unevenness. The inkjet textile printing method according to this embodiment is particularly useful because, in the case where a polyester fiber, thin fabric fiber, coarsely woven fiber, etc. are used, strike-through can be suppressed and a printed matter with high density and adhesiveness can be obtained.

Moreover, in the case of adhering two or more ink compositions successively to the same recording region, even the ink composition applied later can be effectively aggregated. Specifically, the inkjet textile printing method according to this embodiment is particularly useful in such a case where a white ink composition is adhered to a dark-colored fiber including black to form a substrate and then a color ink is adhered to the substrate to perform textile printing.

Moreover, in the case where, during printing, heating is performed without applying pressure to the surface of the fabric to which the ink composition is adhered in order to fix the ink composition while maintaining the texture of the fabric, the hiding property and adhesiveness decrease as compared with when pressure is applied to the surface. The inkjet textile printing method according to this embodiment can improve the hiding property and adhesiveness even in the case where such a non-contact heating method is used.

[Pretreatment step]

The pretreatment step refers to the step of applying the pretreatment composition to the fabric. The means for applying the pretreatment composition is not limited, and roller coating, spray coating, or inkjet coating may be used, for example. Among these, it is preferable to apply the pretreatment composition to the fabric in a non-contact manner, and it is more preferable to apply the pretreatment composition by spray coating or inkjet. If the pretreatment composition is applied in a non-contact manner, the amount of the pretreatment composition to be applied can be more easily

controlled, and the resultant image quality tends to be further improved.

In one embodiment, the amount of the pretreatment composition applied per unit area of the fabric is more than 0.035 g/cm$^2$ and less than 0.070 g/cm$^2$, to form a wet precoat layer. The application amount is preferably 0.039 g/cm$^2$ to 0.063 g/cm$^2$ and further preferably 0.040 g/cm$^2$ to 0.060 g/cm$^2$.

In another embodiment (in particular, an embodiment in which the foregoing water-based white ink composition is used), the amount of the pretreatment composition applied per unit area of the fabric is preferably more than 0.035 g/cm$^2$ and less than 0.070 g/cm$^2$, to form a wet precoat layer. The application amount is more preferably 0.039 g/cm$^2$ to 0.063 g/cm$^2$ and further preferably 0.040 g/cm$^2$ to 0.060 g/cm$^2$.

As a result of the application amount of the pretreatment composition being more than 0.035 g/cm$^2$, in the case where a polyester fiber (mesh cloth used for sportswear etc.), thin fabric fiber, coarsely woven fiber, etc. are used, ink strike-through, i.e., an ink droplet ejected by an inkjet method permeating (penetrating) to the other side of the fiber not subjected to printing, can be suppressed on such fabric susceptible to strike-through, and the whiteness and hiding property when a substrate is provided using white ink tend to be enhanced. In the case where printing is performed using a color ink without providing a white substrate, too, ink strike-through can be suppressed, and a color image with high color development tends to be obtained. As a result of the application amount of the pretreatment composition being less than 0.070 g/cm$^2$, traces of the application of the pretreatment composition tend to be suppressed.

The inkjet textile printing method according to this embodiment preferably comprises a pressure application step of applying pressure to the region where the wet precoat layer is formed after the pretreatment step. With such a step, particularly in the case where a fuzzy cotton fiber, fleece knit material, etc. are used, a uniform wet precoat layer with little fuzzing can be formed, and unevenness of the white substrate can be suppressed. Thus, the whiteness, hiding property, abrasion resistance, and adhesion tend to be improved. In addition, unevenness of the image printed with the color ink and a decrease in color development tend to be suppressed.

The method used in the pressure application step of applying pressure is not limited, and examples thereof include a method using a commercially available roller or spatula and a method using a flat press or a roller type press.

[Recording step]

In one embodiment, the recording step is a step of, without drying the fabric after the pretreatment step, ejecting at least one water-based ink composition from a head and adhering the at least one water-based ink composition to at least part of a region where the wet precoat layer is formed to form an image region.

In one embodiment in which the foregoing water-based white ink composition is used, the recording step is a step of, without drying the fabric after the pretreatment step, ejecting the water-based white ink composition from a head and adhering the water-based white ink composition to at least part of a region where the wet precoat layer is formed to form an image region. The recording step using a print set that further includes a water-based ink composition is a step of, without drying the fabric after the pretreatment step, ejecting the water-based white ink composition from a head to at least part of a region where the wet precoat layer is formed to form a white image region, and ejecting a water-based ink composition from a head onto part or whole of a region where the image is formed by ejecting the water-based white ink composition to form a color image region.

It is preferable to, after the pretreatment step, perform the recording step in a state in which 20 mass% or more of the volatile components of the pretreatment composition applied to the fabric remains. That is, heating, air blowing, and leaving for drying the pretreatment composition can be omitted in the printing method according to this embodiment. Hence, in the case of performing the pretreatment step to the recording step in-line, there is no need to provide a drying step therebetween, with it being possible to simplify the apparatus and improve the production efficiency. In the case of an ordinary ink composition, the adhesiveness of the cohesive resin in the water-based ink composition tends to be lower when a larger amount of the pretreatment composition remains. With the printing method according to this embodiment using the pretreatment composition, however, a decrease in adhesiveness can be suppressed even when the recording step is performed in a state in which 20 mass% or more of the volatile components of the pretreatment composition remains. The residual ratio of the volatile components of the pretreatment composition is the ratio of the amount of the volatile components remaining on the fabric when performing the recording step to the application amount (mass) of the volatile components contained in the pretreatment composition applied to the fabric. The amount of the volatile components in the pretreatment composition can be measured by the method described in the EXAMPLES section. The volatile components are components that do not remain on the fabric after drying the pretreatment composition, such as water and water-soluble organic solvents.

[Drying step]

The printing method according to this embodiment preferably further includes a drying step of heating the fabric after the recording step. Such heating can fusion-bond the resin emulsion that may be contained in the pretreatment

composition or the water-based ink composition to the surface of the fabric, and also facilitate the crosslinking reaction between the crosslinking agent and the resin emulsion while simultaneously evaporating moisture. Further, by performing the drying step, the obtained image tends to be more excellent in abrasion resistance and adhesion.

In the drying step, the water-based ink composition-adhered surface of the fabric may or may not be subjected to pressure application, but a non-contact heating method that does not apply pressure to the water-based ink composition-adhered surface of the fabric is preferable. An example of the non-contact heating method is oven drying (a method not involving pressing such as conveyor ovens and batch ovens). The drying step can further improve the production efficiency. In the case of providing a substrate with white ink on a dark-colored polyester fiber including black or a blend including the polyester fiber, drying the white ink-adhered surface by a non-contact heating method can suppress the decrease in whiteness caused by dye migration. The contact heating method, which also applies pressure to the water-based ink composition-adhered surface of the fabric, is not limited, and examples thereof include a heat press.

The heat source for heating is not limited, and is, for example, infrared (lamp). The temperature during drying is set so as to fusion-bond the resin emulsion that may be contained in the ink composition, facilitate the crosslinking reaction between the crosslinking agent and the resin emulsion, and evaporate moisture. In the case of using a dark-colored polyester fiber including black or a blend including the polyester fiber, the temperature during drying is preferably 130°C or less and more preferably 120°C to 130°C, from the viewpoint of preventing dye migration. As a result of the temperature being in the foregoing range, a decrease in whiteness caused by dye migration tends to be suppressed and the abrasion resistance and adhesiveness tend to be improved. In the case of using a fiber (e.g., cotton, nylon, etc.) other than polyester, the temperature during drying is preferably 150°C or more, more preferably 150°C to 190°C, and particularly preferably 150°C to 180°C. As a result of the temperature being in the foregoing range, the abrasion resistance and adhesiveness tend to be improved. As a result of the temperature being 190°C or less, thermal degradation of the components contained in the fiber and the pretreatment composition can be prevented.

The drying time is preferably 3 minutes to 20 minutes and more preferably 5 minutes to 16 minutes. In the case of using a dark-colored polyester fiber including black or a blend including the polyester fiber, the drying time is preferably 3 minutes to 10 minutes, more preferably 4 minutes to 8 minutes, and particularly preferably 5 minutes to 7 minutes, from the viewpoint of preventing dye migration.

After the drying step, the fabric may be washed with water and dried. Here, a soaping treatment, i.e., a treatment of washing off unfixed pigments with a hot soap solution or the like may be optionally performed.

The pretreatment composition according to the present disclosure has high whiteness and hiding property when a substrate is provided using white ink and excellent adhesiveness to fabrics with little traces of pretreatment, and therefore enables high-quality white textile printing. The pretreatment composition according to the present disclosure also has excellent storage stability. Since the whiteness and hiding property of the substrate can be enhanced, the color development of the image printed on the substrate with color ink can be enhanced, so that a printed matter having a high-quality color image can be obtained. The printed matter obtained using the pretreatment composition according to the present disclosure is excellent in various fastnesses such as light resistance, water resistance, and washing fastness.

The print set according to the present disclosure has high whiteness and hiding property when a substrate is provided using white ink and excellent adhesiveness to fabrics with little traces of pretreatment, and therefore enables high-quality white textile printing. Since the whiteness and hiding property of the substrate can be enhanced, the color development of the image printed on the substrate with color ink can be enhanced, so that a printed matter having a high-quality color image can be obtained.

The textile printing method of the present disclosure achieves high whiteness and hiding property when a substrate is provided using white ink and excellent adhesiveness to fabrics with little traces of pretreatment, and therefore enables high-quality white textile printing. Since the whiteness and hiding property of the substrate can be enhanced, the color development of the image printed on the substrate with color ink can be enhanced, so that a printed matter having a high-quality color image can be obtained.

## EXAMPLES

The presently disclosed techniques will be described in detail below by way of examples, although the present disclosure is not limited to these examples. Each pretreatment composition and water-based ink composition were prepared under stirring, unless otherwise specified.

The term "water" used in the examples denotes ion exchange water.

[Preparation Example 1]: Preparation of dispersion 1

HIROS XVS-1202 (9 parts) available from Seiko PMC Corporation was dissolved in 2-butanone (30 parts). To the solution was added a solution of 0.9 parts of sodium hydroxide in ion exchange water (76 parts). The mixture was stirred for 1 hour to obtain an emulsified liquid. To the resulting emulsified liquid was added C.I. Pigment Black 7 (30

parts). The mixture was dispersed in a sand grinder at 1500 rpm for 15 hours. Ion exchange water (150 parts) was dropped into the resulting liquid, and then dispersing beads were removed by filtration. The resulting mother dispersion was concentrated by distilling off 2-butanone and some water at reduced pressure using an evaporator to obtain a dispersion having a solid content of 11.9%, which is referred to as "dispersion 1". The solid content of the water solution was measured by the dry weight method using MS-70 available from A&D Company, Limited. The pigment present in dispersion 1 had an average particle size of 88 nm. Dispersion 1 had a viscosity of 4.6 mPa’s at 25°C.

[Preparation Examples 2 and 3]: Preparation of water-based white ink composition and water-based ink composition

Inks 1 and 2 were each obtained by sufficiently stirring and mixing the components shown in Table 1 below. The resulting inks were each filtered through a mixed cellulose ester filter with a pore size of 5 μm, and then degassed using a vacuum pump to obtain test inks 1 and 2.

Each description in Table 1 below indicates the following. The numerical values in Table 1 are in units of parts.

Ink 1: water-based white ink composition prepared in Preparation Example 2.
Ink 2: water-based ink composition prepared in Preparation Example 3.
FUJI SP SAMPLE 138 (white pigment dispersion, solid content 50%, available from Fuji Pigment Co., Ltd.).
Dispersion 1 (dispersion 1 obtained in Preparation Example 1).
HYDRAN WLS-201 (urethane resin emulsion, solid content 35%, freezing point -11°C, glass transition temperature -79°C, available from DIC Corporation).
JSR0568 (styrene-butadiene resin latex, solid content 50%, available from JSR Corporation).
OLFINE EXP-4001 (surfactant, available from Nissin Chemical Co., Ltd.).
SURFYNOL 420 (surfactant, available from Nissin Chemical Co., Ltd.).
SURFYNOL DF-110D (surfactant, available from Nissin Chemical Co., Ltd.).
PROXEL GXL(S) (antiseptic, available from Lonza Co., Ltd.).
TEA: triethanolamine available from Junsei Chemical Co., Ltd.

[Table 1]

| Component | Ink 1 | Ink 2 |
|---|---|---|
| FUJI SP SAMPLE 138 | 20 | |
| Dispersion 1 | | 50 |
| HYDRAN WLS-201 | 43 | |
| JSR0568 | | 6 |
| Glycerin | 18 | |
| Diglycerin | | 15 |
| Propylene glycol | | 10 |
| Butyl diglycol | | 3 |
| OLFINE EXP-4001 | 0.8 | |
| SURFYNOL 420 | | 0.1 |
| SURFYNOL DF-110D | | 0.1 |
| PROXEL GXL(S) | 0.1 | 0.1 |
| 25% NaOH aqueous solution | 0.6 | |
| TEA | 0.4 | 0.1 |
| Water | 17.1 | 15.6 |
| Total | 100 | 100 |

[Examples 1 to 5, Comparative Examples 1 to 7]: Preparation of pretreatment composition

Each pretreatment composition in a total amount of 100 parts was obtained by mixing the components shown

in Table 2 below. The resulting liquids were each filtered through a membrane filter having an average pore size of 3 μm to obtain pretreatment compositions 1 to 8 for evaluation testing.

The abbreviations, etc. in Table 2 below have the following meanings. The numerical values in Table 1 are in units of parts.

DK6850: Epihalohydrin-modified polyamine resin (available from Seiko PMC Corporation, weight-average molecular weight: 1703, cationic polymer containing epihalohydrin structural unit, active ingredient 70%).

DK6854: Epihalohydrin-modified polyamine resin (available from Seiko PMC Corporation, weight-average molecular weight: 5853, cationic polymer containing epihalohydrin structural unit, active ingredient 50%).

PAA-HCL-03: allylamine hydrochloride polymer (available from Nittobo Medical Co., Ltd., weight-average molecular weight: 6611, cationic polymer containing allylamine structural unit, active ingredient 40%).

MEIKANATE FM-1: Block isocyanate-based crosslinking agent (available from Meisei Chemical Works, Ltd., cationic, dissociation temperature 120°C or more, active ingredient 30%).

MEIKANATE ST: Block isocyanate-based crosslinking agent (available from Meisei Chemical Works, Ltd., cationic, dissociation temperature 120°C or more, active ingredient 30%).

Mass% of cationic polymer: Content mass (%) of cationic polymer with respect to total mass of pretreatment composition.

Application amount [g/cm$^2$]: Amount of pretreatment composition applied per unit area of fabric.

[Weight-average molecular weight of cationic polymer]

Measurement was performed using polystyrene as a standard substance, by gel permeation chromatography [GPC device (HLC-8320GPC EcoSEC) available from Tosoh Corporation, columns (TSKgel Super AW4000, TSKgel Super AW3000 × 2 connected) available from Tosoh Corporation, flow rate: 0.6 mL/min] using a water solution of acetic acid (500 mM) and $Na_2NO_3$ (200 mM) as a developing solvent.

[Table 2]

| | | | Example | | | | | Comparative Example | | | | | | |
|---|---|---|---|---|---|---|---|---|---|---|---|---|---|---|
| | | | 1 | 2 | 3 | 4 | 5 | 1 | 2 | 3 | 4 | 5 | 6 | 7 |
| Pretreatment composition No. | | | 1 | 2 | 2 | 3 | 4 | 5 | 6 | 7 | 8 | 2 | 2 | 2 |
| Components of pretreatment composition | Flocculant | DK6850 | 5 | 5 | 5 | | | 5 | 2 | 15 | 5 | 5 | 5 | 5 |
| | | DK6854 | | | | 7 | | | | | | | | |
| | | PAA-HCL-03 | | | | | 9 | | | | | | | |
| | Crosslinking agent | MEIKANATE FM-1 | 3 | | | | | | | | | | | |
| | | MEIKANATE ST | | 3 | 3 | 3 | 3 | | 3 | 3 | 9 | 3 | 3 | 3 |
| | Water | | 92 | 92 | 92 | 90 | 88 | 95 | 95 | 82 | 86 | 92 | 92 | 92 |
| | Total | | 100 | 100 | 100 | 100 | 100 | 100 | 100 | 100 | 100 | 100 | 100 | 100 |
| | Mass% of cationic polymer | | 3.5 | 3.5 | 3.5 | 3.5 | 3.5 | 3.5 | 1.4 | 10.5 | 3.5 | 3.5 | 3.5 | 3.5 |
| | Mass% of crosslinking agent | | 0.9 | 0.9 | 0.9 | 0.9 | 0.9 | 0 | 0.9 | 0.9 | 2.7 | 0.9 | 0.9 | 0.9 |
| | Surface tension [mN/m] | | 50 | 45 | 45 | 44 | 44 | 73 | 46 | 43 | 38 | 45 | 45 | 45 |
| Fabric type | | | PET | PET | PET | PET | PET | PET | PET | PET | PET | PET | PET | PET |
| Application amount [g/cm$^2$] | | | 0.051 | 0.041 | 0.051 | 0.051 | 0.051 | 0.051 | 0.051 | 0.051 | 0.051 | 0.070 | 0.035 | 0.019 |
| Evaluation | Whiteness | | 92 | 91 | 92 | 91 | 91 | 89 | 88 | 92 | 92 | 92 | 84 | 80 |
| | Hiding property | | A | A | A | A | A | C | C | A | A | A | C | D |
| | Adhesiveness | | A | A | A | A | A | B | D | A | A | A | C | C |
| | Traces of pretreatment | | A | A | A | A | A | A | A | C | B | C | A | A |
| | Storage stability | | A | A | A | A | A | A | A | B | C | A | A | A |

[Recorded matter production method]

[Pretreatment step]

Each of pretreatment compositions 1 to 8 obtained as described above was applied to a polyester fabric (dry T-shirt, black 00300-ACT (available from Glimmer)) in the amount shown in Table 2 in an A4 size to form a wet precoat layer. Here, pretreatment compositions 1 to 8 were each applied using a commercially available sprayer (Fine Spray available from Mitsugiron, Co., Ltd.). Immediately after the application of the pretreatment composition, the following recording step was performed.

[Remaining amount of pretreatment composition]

The remaining amount of the pretreatment composition before the recording step was calculated by the following formula. The remaining amount was 95% or more in each of the Examples and the Comparative Examples.

$$\text{Remaining amount of pretreatment composition (\%)} = (\text{weight of fabric before recording step} - \text{weight of fabric before pretreatment step})/(\text{weight of fabric immediately after application in pretreatment step} - \text{weight of fabric before pretreatment step}) \times 100\%$$

[Recording step]

The water-based white ink composition (ink 1) prepared as described above was charged into an industrial inkjet evaluation device (extended coating device EV2500: available from Ricoh Co., Ltd.). After this, under the conditions of ink droplet weight of 29 pl/dot, head temperature of 25°C, resolution of 600 × 1200 dpi, and 6 times overprinting, the water-based ink composition (ink 1) was adhered to part of the region of the wet precoat layer obtained as described above to form a white solid pattern image. In the Examples and Comparative Examples, after the ink composition was adhered, the resulting printed matter was dried by heating at 130°C for 3 minutes using a drawer-type electric dryer (DDC-6A, available from ADELCO).

The pretreatment step and the recording step were performed at room temperature of 25°C.

In each of the Examples and Comparative Examples, a recorded matter was also produced by performing the pretreatment step on the fabric and, without the ink adhesion, performing the same drying by heating as in the case of performing the ink adhesion.

[Whiteness]

The L* value of the printed surface of the resulting printed matter recorded with the water-based white ink composition (ink 1) was measured. Using a spectrophotometer (X-Rite Ci62, available from X-Rite, Inc.) as a colorimeter, the L* value in a CIE/L*a*b* color system was measured under the measurement conditions of a light source of D65 and a viewing angle of 2°. Each printed matter was measured five times, the average values are shown in Table 2 as the measurement results. A larger L* value is preferable because higher whiteness is indicated. The L* value indicates a numerical value rounded to the first decimal place.

[Hiding property]

For the hiding property of the printed surface of the resulting printed matter recorded with the water-based white ink composition (ink 1), the granularity [%] (graininess) of an area (solid region) analysis tool was measured using a personal image quality evaluation device PIAS II (available from Quality Engineering Associates). The average value of granularity [%] for each color of cyan, magenta, yellow, and black obtained by the measurement was calculated and evaluated based on the following evaluation criteria. Table 2 shows the evaluation results. A smaller value of granularity [%] (graininess) indicates higher hiding property.

(Evaluation criteria)

A: Granularity [%] of less than 4.5.
B: Granularity [%] of 4.5 or more and less than 6.0.
C: Granularity [%] of 6.0 or more and less than 8.5.
D: Granularity [%] of 8.5 or more.

[Adhesiveness]

The adhesiveness of the printed surface of the resulting printed matter recorded with the water-based white ink composition (ink 1) was determined by a washing fastness test. The washing fastness test was repeatedly performed three times according to "AATCC61 2A", and evaluation was made based on the following evaluation criteria. Table 2 shows the evaluation results.

(Evaluation criteria)

A: No falling off of the film even after the test was performed three times.
B: After the test was performed three times, the film fell off, but more than half of the film remained without falling off.
C: After the test was performed twice, the film fell off.
D: After the test was performed once, the film fell off.

[Traces of pretreatment]

Using the recorded matter that had undergone the pretreatment step without the ink adhesion, the pretreatment applied part (with no ink adhered) and the non-applied part (the fabric itself) of the recorded matter were visually compared, and white traces derived from the pretreatment composition in the pretreatment applied part were checked. Table 2 shows the evaluation results.

(Evaluation criteria)

A: No traces were left.
B: Some traces were left.
C: Considerable traces were left.

[Storage stability test]

10 g of each of pretreatment compositions 1 to 9 prepared as described above was weighed into a 30 ml glass tube bottle (SV-30A available from Nichiden Rika Glass Co., Ltd.) and sealed with a cap to obtain each sample for testing. Each obtained sample was stored at 60°C for 1 week, and the change in appearance after the storage was evaluated based on the following criteria. Table 2 shows the evaluation results.

(Evaluation criteria)

A: Good with no change in appearance after storage.
B: Aggregates were slightly observed but there was no sedimentation after storage.
C: Significant aggregation occurred and there was sedimentation of 1 mm or more in thickness in the liquid of 2 cm in height after storage.

As is clear from the results in Table 2, the pretreatment compositions in the Examples each containing a cationic polymer containing a specific structural unit and a crosslinking agent exhibited good whiteness, hiding property, and adhesiveness, showed no traces of pretreatment, and had excellent storage stability, as compared with the pretreatment compositions in Comparative Examples 1 to 4. In Comparative Example 1 in which no crosslinking agent was contained, the whiteness, hiding property, and adhesiveness decreased. In Comparative Example 2 in which the amount of the cationic polymer added was small, the whiteness and adhesiveness decreased. In Comparative Example 3 in which the

amount of the cationic polymer added was large, traces worsened. In Comparative Example 4 in which the amount of the crosslinking agent added was large, the storage stability worsened.

[Examples 6 to 18, Comparative Examples 8 to 13]: Preparation of pretreatment composition

Each pretreatment composition in a total amount of 100 parts was obtained by mixing the components shown in Table 3 below. The resulting liquids were each filtered through a membrane filter having an average pore size of 3 μm to obtain pretreatment compositions 9 to 24 for evaluation testing.

The abbreviations, etc. in Table 3 below have the following meanings. The numerical values in Table 1 are in units of parts.

DK6850: Epihalohydrin-modified polyamine resin (available from Seiko PMC Corporation, weight-average molecular weight: 1703, cationic polymer containing epihalohydrin structural unit, active ingredient 70%).

DK6854: Epihalohydrin-modified polyamine resin (available from Seiko PMC Corporation, weight-average molecular weight: 5853, cationic polymer containing epihalohydrin structural unit, active ingredient 50%).

DK6885: Epihalohydrin-modified polyamine resin (available from Seiko PMC Corporation, weight-average molecular weight: 2038, cationic polymer containing epihalohydrin structural unit, active ingredient 70%).

PAA-HCL-01: Allylamine hydrochloride polymer (available from Nittobo Medical Co., Ltd., weight-average molecular weight: 1955, cationic polymer containing allylamine structural unit, active ingredient 34%).

PAA-HCL-03: Allylamine hydrochloride polymer (available from Nittobo Medical Co., Ltd., weight-average molecular weight: 6611, cationic polymer containing allylamine structural unit, active ingredient 40%).

UNISENCE KHE100L: Epihalohydrin-modified polyamine resin (available from Senka Corporation, weight-average molecular weight: 2191, cationic polymer containing epihalohydrin structural unit, active ingredient 60%).

CARBODILITE E-02: Carbodiimide-based crosslinking agent (available from Nisshinbo Chemical Inc., cationic, active ingredient 40%).

EPOCROS WS-700: Oxazoline-based crosslinking agent (available from Nippon Shokubai Co., Ltd., cationic, active ingredient 25%).

Trixene Aqua BI522: Block isocyanate-based crosslinking agent (available from Baxenden Chemicals Ltd., cationic, active ingredient 40%).

Mass% of cationic polymer: Content mass (%) of cationic polymer with respect to total mass of pretreatment composition.

Application amount [g/cm$^2$]: Amount of pretreatment composition applied per unit area of fabric.

[Table 3]

| | | | Example | | | | | | | | | | | | | Comparative Example | | | | | |
|---|---|---|---|---|---|---|---|---|---|---|---|---|---|---|---|---|---|---|---|---|---|
| | | | 6 | 7 | 8 | 9 | 10 | 11 | 12 | 13 | 14 | 15 | 16 | 17 | 18 | 8 | 9 | 10 | 11 | 12 | 13 |
| Pretreatment composition No. | | | 9 | 10 | 11 | 12 | 13 | 14 | 15 | 16 | 17 | 18 | 19 | 20 | 21 | 22 | 23 | 24 | 10 | 10 | 10 |
| Components of pretreatment composition | Flocculant | DK6850 | 5 | 5 | 5 | | | | | | | | | | | 2 | 15 | 5 | 5 | 5 | 5 |
| | | DK6854 | | | | 7 | 7 | 7 | | | | | | | | | | | | | |
| | | DK6885 | | | | | | | 5 | 5 | | | | | | | | | | | |
| | | PAA-HCL-01 | | | | | | | | | 10 | | | | | | | | | | |
| | | PAA-HCL-03 | | | | | | | | | | 9 | 9 | | | | | | | | |
| | | UNISENCE KHE100L | | | | | | | | | | | | 6 | 6 | | | | | | |
| | Crosslinking agent | CARBODILITE E-02 | 3 | | | 3 | | | | | | | | | | | | | | | |
| | | EPOCROS WS-700 | | 4 | | | 4 | | 4 | | 4 | 4 | | 4 | | 4 | 4 | 11 | 4 | 4 | 4 |
| | | TRIXENE AQUA BI 522 | | | 3 | | | 3 | | 3 | | | 3 | | 3 | | | | | | |
| | Water | | 92 | 91 | 92 | 90 | 89 | 90 | 91 | 92 | 86 | 87 | 88 | 90 | 91 | 94 | 81 | 84 | 91 | 91 | 91 |
| | Total | | 100 | 100 | 100 | 100 | 100 | 100 | 100 | 100 | 100 | 100 | 100 | 100 | 100 | 100 | 100 | 100 | 100 | 100 | 100 |
| | Mass% of cationic polymer | | 3.5 | 3.5 | 3.5 | 3.5 | 3.5 | 3.5 | 3.6 | 3.5 | 3.4 | 3.6 | 3.6 | 3.6 | 3.6 | 1.4 | 10.5 | 3.5 | 3.5 | 3.5 | 3.5 |
| | Mass% of crosslinking agent | | 1.2 | 1.0 | 1.2 | 1.2 | 1.0 | 1.2 | 1.0 | 1.2 | 1.0 | 1.0 | 1.2 | 1.0 | 1.2 | 1.0 | 1.0 | 2.8 | 1.0 | 1.0 | 1.0 |
| | Surface tension [mN/m] | | 55 | 49 | 45 | 52 | 48 | 45 | 49 | 45 | 48 | 49 | 45 | 48 | 44 | 49 | 49 | 44 | 48 | 48 | 48 |
| Fabric type | | | PET | PET | PET | PET | PET | PET | PET | PET | PET | PET | PET | PET | PET | PET | PET | PET | PET | PET | PET |
| Application amount [g/cm$^2$] | | | 0.051 | 0.051 | 0.051 | 0.051 | 0.051 | 0.051 | 0.051 | 0.051 | 0.051 | 0.051 | 0.051 | 0.051 | 0.051 | 0.051 | 0.051 | 0.051 | 0.070 | 0.035 | 0.019 |

(continued)

| | | Example | | | | | | | | | | | | | Comparative Example | | | | | |
|---|---|---|---|---|---|---|---|---|---|---|---|---|---|---|---|---|---|---|---|---|
| | | 6 | 7 | 8 | 9 | 10 | 11 | 12 | 13 | 14 | 15 | 16 | 17 | 18 | 8 | 9 | 10 | 11 | 12 | 13 |
| Evaluation | Whiteness | 90 | 92 | 91 | 90 | 91 | 91 | 90 | 90 | 92 | 91 | 91 | 91 | 91 | 84 | 92 | 92 | 92 | 84 | 80 |
| | Hiding property | A | A | A | A | A | A | A | A | A | A | A | A | A | C | A | A | A | C | D |
| | Adhesiveness | A | A | A | A | A | A | A | A | A | A | A | A | A | D | A | A | A | C | C |
| | Traces of pretreatment | A | A | A | A | A | A | A | A | A | A | A | A | A | A | C | C | C | A | A |
| | Storage stability | A | A | A | A | A | A | A | A | A | A | A | A | A | A | B | C | A | A | A |

[Recorded matter production method in Examples 6 to 18 and Comparative Examples 8 to 13]

[Pretreatment step]

Each of pretreatment compositions 9 to 24 obtained as described above was applied to a polyester fabric (dry T-shirt, black 00300-ACT (available from Glimmer)) in the amount shown in Table 3 in an A4 size to form a wet precoat layer. Here, pretreatment compositions 9 to 24 were each applied using a commercially available sprayer (Fine Spray available from Mitsugiron, Co., Ltd.). Immediately after the application of the pretreatment composition, the following recording step was performed.

[Recording step]

The water-based ink composition (ink 1) prepared as described above was charged into an industrial inkjet evaluation device (extended coating device EV2500: available from Ricoh Co., Ltd.). After this, under the conditions of ink droplet weight of 29 pl/dot, head temperature of 25°C, resolution of 600 × 1200 dpi, and 6 times overprinting, the water-based ink composition (ink 1) was adhered to part of the region of the wet precoat layer obtained as described above to form a white solid pattern image. After the ink composition was adhered, the ink composition was dried by heating at 130°C for 3 minutes using a drawer-type electric dryer (DDC-6A, available from ADELCO).

Using the recorded matters in Examples 6 to 18 and Comparative Examples 8 to 13, the whiteness, hiding property, adhesiveness, traces of pretreatment, and storage stability were evaluated. Table 3 shows the results.

As is clear from the results in Table 3, the pretreatment compositions in the Examples each containing a cationic polymer containing a specific structural unit and a crosslinking agent exhibited good whiteness, hiding property, and adhesiveness, showed no traces of pretreatment, and had excellent storage stability, as compared with the pretreatment compositions in Comparative Examples 8 to 10. In Comparative Example 8 in which the amount of the cationic polymer added was small, the whiteness and adhesiveness decreased. In Comparative Example 9 in which the amount of the cationic polymer added was large, traces worsened. In Comparative Example 10 in which the amount of the crosslinking agent added was large, the storage stability worsened. In Comparative Example 11 in which the amount of the pretreatment composition applied was large, traces worsened. In Comparative Examples 12 and 13 in which the amount of the pretreatment composition applied was small, the whiteness, hiding property, and adhesiveness decreased.

[Examples 19 to 22, Comparative Examples 14 to 17]: Preparation of pretreatment composition

Each pretreatment composition in a total amount of 100 parts was obtained by mixing the components shown in Table 4 below. The resulting liquids were each filtered through a membrane filter having an average pore size of 3 μm to obtain pretreatment compositions 1, 2, and 4 to 8 for evaluation testing.

Each description in Table 4 below indicates the following. The numerical values in Table 4 are in units of parts.

DK6850: Epihalohydrin-modified polyamine resin (available from Seiko PMC Corporation, weight-average molecular weight: 1703, cationic polymer containing epihalohydrin structural unit, active ingredient 70%).

PAA-HCL-03: Allylamine hydrochloride polymer (available from Nittobo Medical Co., Ltd., weight-average molecular weight: 6611, cationic polymer containing allylamine structural unit, active ingredient 40%).

MEIKANATE FM-1: Block isocyanate-based crosslinking agent (available from Meisei Chemical Works, Ltd., cationic, dissociation temperature 120°C or more, active ingredient 30%).

MEIKANATE ST: Block isocyanate-based crosslinking agent (available from Meisei Chemical Works, Ltd., cationic, dissociation temperature 120°C or more, active ingredient 30%).

[Table 4]

| | | | Example | | | | Comparative Example | | | |
|---|---|---|---|---|---|---|---|---|---|---|
| | | | 19 | 20 | 21 | 22 | 14 | 15 | 16 | 17 |
| Pretreatment composition No. | | | 1 | 2 | 2 | 4 | 5 | 6 | 7 | 8 |
| Components of pretreatment composition | Flocculant | DK6850 | 5 | 5 | 5 | | 5 | 2 | 15 | 5 |
| | | PAA-HCL-03 | | | | 9 | | | | |
| | Crosslinking agent | MEIKANATE FM-1 | 3 | | | | | | | |
| | | MEIKANATE ST | | 3 | 3 | 3 | | 3 | 3 | 9 |
| | Water | | 92 | 92 | 92 | 88 | 95 | 95 | 82 | 86 |
| | Total | | 100 | 100 | 100 | 100 | 100 | 100 | 100 | 100 |
| | Mass% of cationic polymer | | 3.5 | 3.5 | 3.5 | 3.5 | 3.5 | 1.4 | 10.5 | 3.5 |
| | Mass% of crosslinking agent | | 0.9 | 0.9 | 0.9 | 0.9 | 0 | 0.9 | 0.9 | 2.7 |
| | Surface tension [mN/m] | | 50 | 45 | 45 | 44 | 73 | 46 | 43 | 38 |
| Water-based white ink composition | | | Ink 1 | Ink 1 | Ink 1 | Ink 1 | Ink 1 | Ink 1 | Ink 1 | Ink 1 |
| Water-based ink composition | | | Ink 2 | Ink 2 | Ink 2 | Ink 2 | Ink 2 | Ink 2 | Ink 2 | Ink 2 |
| Fabric type | | | PET | PET | PET | PET | PET | PET | PET | PET |
| Application amount [g/cm$^2$] | | | 0.051 | 0.041 | 0.051 | 0.051 | 0.051 | 0.051 | 0.051 | 0.051 |
| Evaluation | Whiteness | | 92 | 91 | 92 | 91 | 89 | 88 | 92 | 92 |
| | Hiding property | | A | A | A | A | C | C | A | A |
| | Adhesiveness | | A | A | A | A | B | D | A | A |
| | Unevenness in solid printing of water-based ink composition | | A | A | A | A | C | C | A | A |
| | Traces of pretreatment | | A | A | A | A | A | A | C | B |
| | Storage stability | | A | A | A | A | A | A | B | C |

[Recorded matter production method]

[Pretreatment step]

Each of pretreatment compositions 1, 2, and 4 to 8 was applied to a polyester fabric (dry T-shirt, black 00300-ACT (available from Glimmer)) in the amount shown in Table 4 in an A4 size to form a wet precoat layer. Here, pretreatment compositions 1, 2, and 4 to 8 were each applied using a commercially available sprayer (Fine Spray available from Mitsugiron, Co., Ltd.). Immediately after the application of the pretreatment composition, the following recording step was performed.

[Remaining amount of pretreatment composition]

The remaining amount of the pretreatment composition before the recording step was calculated by the following formula. The remaining amount was 95% or more in each of the Examples and the Comparative Examples.

Remaining amount of pretreatment composition (%) = (weight of fabric before recording step - weight of fabric before pretreatment step)/(weight of fabric immediately after application in pretreatment step - weight of fabric before pretreatment step) $\times$ 100%

[Recording step]

The water-based white ink composition (ink 1) and water-based ink composition (ink 2) prepared as described above were each charged into an industrial inkjet evaluation device (extended coating device EV2500: available from Ricoh Co., Ltd.). After this, under the conditions of ink droplet weight of 29 pl/dot, head temperature of 25°C, resolution of 600 $\times$ 1200 dpi, and 6 times overprinting, the water-based white ink composition (ink 1) was adhered to part of the region of the wet precoat layer obtained as described above to form a white solid pattern image. Following this, under the conditions of ink droplet weight of 27 pl/dot, head temperature of 25°C, resolution of 600 $\times$ 1200 dpi, and 6 times overprinting, the water-based ink composition (ink 2) was adhered to half of the region where the water-based white ink composition (ink 1) had been applied, to form a black solid pattern image. After the water-based ink composition (ink 2) was adhered, the resulting printed matter was dried by heating at 130°C for 3 minutes using a drawer-type electric dryer (DDC-6A, available from ADELCO). The pretreatment step and the recording step were performed at room temperature of 25°C.

In each of the Examples and Comparative Examples, a recorded matter was also produced by performing the pretreatment step on the fabric and, without the ink adhesion, performing the same drying by heating as in the case of performing the ink adhesion.

Using the recorded matters in Examples 19 to 22 and Comparative Examples 14 to 17, the whiteness, hiding property, adhesiveness, traces of pretreatment, and storage stability were evaluated by the foregoing methods. Moreover, the unevenness in solid printing of the water-based ink composition was evaluated by the following method. Table 4 shows the results.

[Unevenness in solid printing of water-based ink composition]

For the unevenness in solid printing of the water-based ink composition, the black solid pattern image obtained as described above was visually observed and evaluated based on the following evaluation criteria. Table 4 shows the evaluation results.

(Evaluation criteria)

A: The filling in solid printing of the water-based ink composition was uniform.

B: The filling in solid printing of the water-based ink composition was not uniform, and some density unevenness was observed.

C: The filling in solid printing of the water-based ink composition was not uniform, and considerable density unevenness was observed.

As is clear from the results in Table 4, the print sets in the Examples exhibited good whiteness, hiding property, and adhesiveness, had little unevenness in solid printing of the water-based ink composition (color ink), and showed no traces of pretreatment.

In Comparative Example 14 using a pretreatment composition containing no crosslinking agent and in Comparative Example 15 using a pretreatment composition in which the amount of the cationic polymer added was small, the whiteness, hiding property, and adhesiveness decreased, and the unevenness in solid color printing worsened significantly. In Comparative Example 16 using a pretreatment composition in which the amount of the cationic polymer added was large, traces worsened. In Comparative Example 17 using a pretreatment composition in which the amount of the crosslinking agent added was large, the storage stability worsened.

[Examples 23 to 30, Comparative Examples 18 to 29]: Preparation of pretreatment composition

Each pretreatment composition in a total amount of 100 parts was obtained by mixing the components shown in Table 5 below. The resulting liquids were each filtered through a membrane filter having an average pore size of 3 μm to obtain pretreatment compositions 1, 2, and 4 to 8 for evaluation testing.

Each description in Table 5 below indicates the following. The numerical values in Table 5 are in units of parts.

DK6850: Epihalohydrin-modified polyamine resin (available from Seiko PMC Corporation, weight-average molecular weight: 1703, cationic polymer containing epihalohydrin structural unit, active ingredient 70%).

PAA-HCL-03: Allylamine hydrochloride polymer (available from Nittobo Medical Co., Ltd., weight-average molecular weight: 6611, cationic polymer containing allylamine structural unit, active ingredient 40%).

MEIKANATE FM-1: Block isocyanate-based crosslinking agent (available from Meisei Chemical Works, Ltd., cationic, dissociation temperature 120°C or more, active ingredient 30%).

MEIKANATE ST: Block isocyanate-based crosslinking agent (available from Meisei Chemical Works, Ltd., cationic, dissociation temperature 120°C or more, active ingredient 30%).

[Table 5]

| | | | Example | | | | | | | | Comparative Example | | | | | | | | | | | |
|---|---|---|---|---|---|---|---|---|---|---|---|---|---|---|---|---|---|---|---|---|---|---|
| | | | 23 | 24 | 25 | 26 | 27 | 28 | 29 | 30 | 18 | 19 | 20 | 21 | 22 | 23 | 24 | 25 | 26 | 27 | 28 | 29 |
| Pretreatment composition No. | | | 1 | 2 | 2 | 4 | 2 | 2 | 2 | 2 | 5 | 6 | 7 | 8 | 2 | 2 | 2 | 2 | 2 | 2 | 2 | 2 |
| Components of pretreatment composition | Flocculant | DK6850 | 5 | 5 | 5 | | 5 | 5 | 5 | 5 | 5 | 2 | 15 | 5 | 5 | 5 | 5 | 5 | 5 | 5 | 5 | 5 |
| | | PAA-HCL-03 | | | | 9 | | | | | | | | | | | | | | | | |
| | Crosslinking agent | MEIKANATE FM-1 | 3 | | | | | | | | | | | | | | | | | | | |
| | | MEIKANATE ST | | 3 | 3 | 3 | 3 | 3 | 3 | 3 | | 3 | 3 | 9 | 3 | 3 | 3 | 3 | 3 | 3 | 3 | 3 |
| | Water | | 92 | 92 | 92 | 88 | 92 | 92 | 92 | 92 | 95 | 95 | 82 | 86 | 92 | 92 | 92 | 92 | 92 | 92 | 92 | 92 |
| | Total | | 100 | 100 | 100 | 100 | 100 | 100 | 100 | 100 | 100 | 100 | 100 | 100 | 100 | 100 | 100 | 100 | 100 | 100 | 100 | 100 |
| | Mass% of cationic polymer | | 3.5 | 3.5 | 3.5 | 3.5 | 3.5 | 3.5 | 3.5 | 3.5 | 3.5 | 1.4 | 10.5 | 3.5 | 3.5 | 3.5 | 3.5 | 3.5 | 3.5 | 3.5 | 3.5 | 3.5 |
| | Mass% of crosslinking agent | | 0.9 | 0.9 | 0.9 | 0.9 | 0.9 | 0.9 | 0.9 | 0.9 | 0 | 0.9 | 0.9 | 2.7 | 0.9 | 0.9 | 0.9 | 0.9 | 0.9 | 0.9 | 0.9 | 0.9 |
| | Surface tension [mN/m] | | 50 | 45 | 45 | 44 | 45 | 45 | 45 | 45 | 73 | 46 | 43 | 38 | 45 | 45 | 45 | 45 | 45 | 45 | 45 | 45 |
| Water-based white ink composition | | | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 | Ink 1 |
| Water-based ink composition | | | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 | Ink 2 |
| Fabric type | | | PET | PET | PET | PET | TC | Cotton 2 | Cotton 3 | Cotton 1 | PET | PET | PET | PET | PET | PET | PET | PET | TC | Cotton 2 | Cotton 3 | Cotton 1 |
| Application amount [g/cm$^2$] | | | 0.051 | 0.041 | 0.051 | 0.051 | 0.041 | 0.041 | 0.041 | 0.041 | 0.051 | 0.051 | 0.051 | 0.051 | 0.070 | 0.035 | 0.019 | 0.051 | 0.041 | 0.041 | 0.041 | 0.041 |
| Drying after pretreatment | | | No | No | No | No | No | No | No | No | No | No | No | No | No | No | No | Yes | Yes | Yes | Yes | Yes |
| Step of laying down fuzzing after pretreatment application | | | No | No | No | No | No | No | No | Yes | No | No | No | No | No | No | No | No | No | No | No | No |

(continued)

| | | Example | | | | | | | | Comparative Example | | | | | | | | | | | |
|---|---|---|---|---|---|---|---|---|---|---|---|---|---|---|---|---|---|---|---|---|---|
| | | 23 | 24 | 25 | 26 | 27 | 28 | 29 | 30 | 18 | 19 | 20 | 21 | 22 | 23 | 24 | 25 | 26 | 27 | 28 | 29 |
| Evaluation | Whiteness | 92 | 91 | 92 | 91 | 83 | 94 | 94 | 94 | 89 | 88 | 92 | 92 | 92 | 84 | 80 | 85 | 67 | 91 | 91 | 92 |
| | Hiding property | A | A | A | A | A | A | A | A | C | C | A | A | A | C | D | D | E | D | D | C |
| | Adhesiveness | A | A | A | A | A | A | A | A | B | D | A | A | A | C | C | A | A | A | A | A |
| | Unevenness in solid printing of water-based ink composition | A | A | A | A | A | A | A | A | A | A | A | A | A | B | B | C | C | C | C | B |
| | Traces of pretreatment | A | A | A | A | A | A | A | A | A | A | C | B | C | A | A | A | A | A | A | A |
| | Storage stability | A | A | A | A | A | A | A | A | A | A | B | C | A | A | A | A | A | A | A | A |

[Recorded matter production method]

[Pretreatment step]

Each of pretreatment compositions 1, 2, and 4 to 8 was applied to cotton fabric 1 (heavyweight T-shirt, black 00085-CVT (available from PrintStar)), cotton fabric 2 (sheeting, (10000L) 300. black (B) (available from Shinjuku Okadaya)), cotton fabric 3 (Daily fine corduroy, (KOF-14) BK. Black (B) (available from Shinjuku Okadaya)), 35% cotton/65% polyester blend (T/C Broad, (AD40000) 300. Black (B) (available from Shinjuku Okadaya)), and a polyester fabric (dry T-shirt, black 00300-ACT (available from Glimmer)) in the amount shown in Table 5 in an A4 size to form a wet precoat layer. Here, pretreatment compositions 1, 2, and 4 to 8 were each applied using a commercially available sprayer (Fine Spray available from Mitsugiron, Co., Ltd.).
In Example 30, after the application of the pretreatment composition, the wet precoat layer was subjected to a step of laying down the fuzzing of the fabric using a roller (wallpaper construction tool roller available from Yayoi Kagaku Co., Ltd.). Immediately after this, the following recording step was performed.
In Comparative Examples 25 to 29, after the application of the pretreatment composition, drying was performed by heating at 170°C for 60 seconds using a desktop automatic flat press (AF-65TEN available from Asahi Textile Machinery Co., Ltd.). After this, the following recording step was performed.
In the other Examples and Comparative Examples, immediately after the application of the pretreatment composition, the following recording step was performed.

[Remaining amount of pretreatment composition]

The remaining amount of the pretreatment composition before the recording step was calculated by the following formula. The remaining amount of the pretreatment composition before the recording step was less than 20% in each of Comparative Example 25 to 29, and 95% or more in each of the other Examples and Comparative Examples.
Remaining amount of pretreatment composition (%) = (weight of fabric before recording step - weight of fabric before pretreatment step)/(weight of fabric immediately after application in pretreatment step - weight of fabric before pretreatment step) $\times$ 100%

[Recording step]

The water-based white ink composition (ink 1) and water-based ink composition (ink 2) prepared as described above were each charged into an industrial inkjet evaluation device (extended coating device EV2500: available from Ricoh Co., Ltd.). After this, under the conditions of ink droplet weight of 29 pl/dot, head temperature of 25°C, resolution of 600 $\times$ 1200 dpi, and 6 times overprinting, the water-based white ink composition (ink 1) was adhered to part of the region of the wet precoat layer obtained as described above to form a white solid pattern image.
Following this, under the conditions of ink droplet weight of 27 pl/dot, head temperature of 25°C, resolution of 600 $\times$ 1200 dpi, and 6 times overprinting, the water-based ink composition (ink 2) was adhered to half of the region where the water-based white ink composition (ink 1) had been applied, to form a black solid pattern image.
In Examples 28 to 30 and Comparative Examples 27 to 29, after the water-based ink composition (ink 2) was adhered, the resulting printed matter was dried by heating at 150°C for 10 minutes using a drawer-type electric dryer (DDC-6A, available from ADELCO). In the other Examples and Comparative Examples, after the water-based ink composition (ink 2) was adhered, the resulting printed matter was dried by heating at 130°C for 3 minutes using a drawer-type electric dryer (DDC-6A, available from ADELCO). The pretreatment step and the recording step were performed at room temperature of 25°C.
In each of the Examples and Comparative Examples, a recorded matter was also produced by performing the pretreatment step on the fabric and, without the ink adhesion, performing the same drying by heating as in the case of performing the ink adhesion.
Using the recorded matters in Examples 23 to 30 and Comparative Examples 18 to 29, the whiteness, hiding property, adhesiveness, unevenness in solid printing of the water-based ink composition, traces of pretreatment, and storage stability were evaluated by the foregoing methods. Table 5 shows the results.
As is clear from the results in Table 5, the pretreatment compositions in the Examples exhibited good whiteness, hiding property, and adhesiveness, had little unevenness in solid printing of the water-based ink composition (color ink), and showed no traces of pretreatment for various fabrics, as compared with the textile printing methods in the Comparative Examples.
In Comparative Example 18 in which no crosslinking agent was contained, the whiteness, hiding property, and adhesiveness decreased. In Comparative Example 19 in which the amount of the cationic polymer added was small, the whiteness and adhesiveness decreased. In Comparative Example 20 in which the amount of the cationic polymer

added was large, traces worsened. In Comparative Example 21 in which the amount of the crosslinking agent added was large, the storage stability worsened.

In Comparative Example 22 in which the application amount of the pretreatment composition was 0.070 g/cm$^2$ or more, traces of pretreatment worsened. In Comparative Examples 23 and 24 in which the application amount of the pretreatment composition was 0.035 g/cm$^2$ or less, the whiteness, hiding property, and adhesiveness decreased. In Comparative Examples 25 to 29 in which drying was performed after the pretreatment, the whiteness and hiding property decreased, and the unevenness in solid color printing was noticeable.

INDUSTRIAL APPLICABILITY

The pretreatment composition according to the present disclosure enables obtainment of an excellent printed matter having good whiteness, hiding property, and adhesiveness with no traces of pretreatment and also has good storage stability, and therefore is very useful as a pretreatment composition for a wide variety of fabrics.

The print set according to the present disclosure enables obtainment of an excellent printed matter having good whiteness, hiding property, and adhesiveness with no traces of pretreatment for various fabrics and also uses a pretreatment composition with good storage stability, and therefore is very useful as a print set for a wide variety of fabrics.

The inkjet textile printing method according to the present disclosure enables obtainment of an excellent printed matter having good whiteness, hiding property, and adhesiveness with no traces of pretreatment for various fabrics and also uses a pretreatment composition with good storage stability, and therefore can expand the range of application for fabrics and is very useful as an inkjet textile printing method for a wide variety of fabrics.

**Claims**

1. A pretreatment composition that is used to form a wet precoat layer for receiving a water-based ink composition for forming an image on a fabric by an inkjet method, and satisfies all of the following requirements [1] to [4]:

   [1] the water-based ink composition contains water, a pigment, a resin emulsion, a water-soluble organic solvent, and a surfactant,
   [2] the pretreatment composition is used to form the wet precoat layer in which an amount of the pretreatment composition applied per unit area is more than 0.035 g/cm$^2$ and less than 0.070 g/cm$^2$,
   [3] the pretreatment composition contains water, more than 1.4 mass% and less than 10.5 mass% of a cationic polymer with respect to a total mass of the pretreatment composition, and 0.1 mass% or more and less than 2.7 mass% of a crosslinking agent with respect to the total mass of the pretreatment composition, and
   [4] the cationic polymer contains at least one selected from the group consisting of an allylamine structural unit, a diallylamine structural unit, a diallylammonium structural unit, and an epihalohydrin structural unit.

2. The pretreatment composition according to claim 1, wherein the crosslinking agent includes one or more cationic crosslinking agents selected from the group consisting of a blocked isocyanate group-containing compound, a carbodiimide group-containing compound, and an oxazoline group-containing compound.

3. The pretreatment composition according to claim 2, wherein a dissociation temperature of the blocked isocyanate group-containing compound is 120°C or more.

4. The pretreatment composition according to any one of claims 1 to 3, wherein a surface tension at 25°C is 35 mN/m to 60 mN/m.

5. A print set comprising:

   the pretreatment composition according to any one of claims 1 to 4; and
   a water-based ink composition containing water, a pigment, a resin emulsion, a water-soluble organic solvent, and a surfactant.

6. An inkjet textile printing method comprising:

   a pretreatment step of applying the pretreatment composition according to any one of claims 1 to 4 to a fabric to form a wet precoat layer; and
   a recording step of applying, to at least part of a region where the wet precoat layer is formed, a water-based

ink composition containing water, a pigment, a resin emulsion, a water-soluble organic solvent, and a surfactant by an inkjet method to form an image region.

**7.** The inkjet textile printing method according to claim 6, wherein after the pretreatment step, the recording step is performed in a state in which a remaining amount of the pretreatment composition applied to the fabric is 20 mass% or more with respect to a total amount of the pretreatment composition applied in the pretreatment step.

**8.** A printed matter obtainable by printing, on a fabric to which the pretreatment composition according to any one of claims 1 to 4 is applied, the water-based ink composition.

**9.** A print set comprising:

a pretreatment composition containing water, a cationic polymer, and a crosslinking agent; and
a water-based white ink composition containing water, a white pigment, a urethane resin, and a water-soluble organic solvent,
wherein in the pretreatment composition, a content of the cationic polymer is more than 1.4 mass% and less than 10.5 mass% with respect to a total mass of the pretreatment composition, and a content of the crosslinking agent is 0.1 mass% or more and less than 2.7 mass% with respect to the total mass of the pretreatment composition.

**10.** The print set according to claim 9, wherein the cationic polymer is a polymer containing at least one structural unit selected from the group consisting of an allylamine structural unit, a diallylamine structural unit, a diallylammonium structural unit, and an epihalohydrin structural unit.

**11.** The print set according to claim 9 or 10, wherein the crosslinking agent includes one or more cationic crosslinking agents selected from the group consisting of a blocked isocyanate group-containing compound, a carbodiimide group-containing compound, and an oxazoline group-containing compound.

**12.** The print set according to claim 11, wherein a dissociation temperature of the blocked isocyanate group-containing compound is 120°C or more.

**13.** The print set according to any one of claims 9 to 12, wherein a surface tension of the pretreatment composition at 25°C is 35 mN/m to 60 mN/m.

**14.** The print set according to any one of claims 9 to 13, wherein the urethane resin includes at least one selected from the group consisting of a polyether-based urethane resin and a polycarbonate-based urethane resin.

**15.** The print set according to any one of claims 9 to 14, wherein a glass transition temperature of the urethane resin is 0°C or less.

**16.** The print set according to any one of claims 9 to 15, wherein the water-based white ink composition further contains a base.

**17.** The print set according to any one of claims 9 to 16, further comprising
a water-based ink composition containing water, a pigment, and a polymeric dispersant.

**18.** The print set according to claim 17, wherein the polymeric dispersant is a polymer containing at least two constituent monomers selected from the group consisting of a monomer A, a monomer B, and a monomer C represented by the following formula (1):

[Chem. 1]

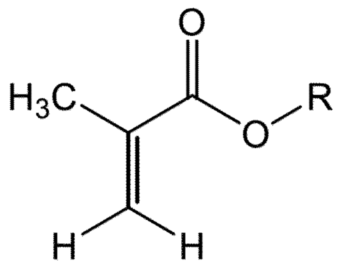

(1)

where the monomer A is a monomer in which R is a hydrogen atom in the formula (1), the monomer B is a monomer in which R is a C1-C4 alkyl group in the formula (1), and the monomer C is a monomer in which R is an aryl group or an aryl C1-C4 alkyl group in the formula (1).

**19.** The print set according to claim 17 or 18, wherein the water-based ink composition further contains at least one selected from the group consisting of a urethane resin, a styrene-butadiene resin, and an acrylic resin.

**20.** An inkjet textile printing method comprising:

a pretreatment step of applying, to a fabric, the pretreatment composition included in the print set according to any one of claims 9 to 19 to form a wet precoat layer; and
a step of, without drying the fabric after the pretreatment step, ejecting the water-based white ink composition included in the print set according to any one of claims 9 to 19 onto a region of part or whole of the wet precoat layer by an inkjet method to form an image.

**21.** An inkjet textile printing method comprising:

a pretreatment step of applying, to a fabric, the pretreatment composition included in the print set according to any one of claims 9 to 19 to form a wet precoat layer;
a step of, without drying the fabric after the pretreatment step, ejecting the water-based white ink composition included in the print set according to any one of claims 9 to 19 onto a region of part or whole of the wet precoat layer by an inkjet method to form an image; and
a step of ejecting, by an inkjet method, the water-based ink composition included in the print set according to any one of claims 17 to 19 onto part or whole of a region where the image is formed by ejecting the water-based white ink composition, to form an image.

**22.** The inkjet textile printing method according to claim 20 or 21, wherein the fabric is polyester or a blend containing polyester.

**23.** The inkjet textile printing method according to claim 22, comprising
a step of drying, at 130°C or less, the fabric on which the image is formed, after the step of applying the water-based ink composition.

**24.** The inkjet textile printing method according to claim 20 or 21, wherein the fabric is cotton or a blend containing cotton.

**25.** The inkjet textile printing method according to claim 24, comprising
a pressure application step of applying pressure to a region where the wet precoat layer is formed, after the pretreatment step.

**26.** An inkjet textile printing method of forming an image on a fabric using: a pretreatment composition containing water, a cationic polymer, and a crosslinking agent; and at least one water-based ink composition, the inkjet textile printing method comprising:

a pretreatment step of applying the pretreatment composition to the fabric to form a wet precoat layer; and
a step of, without drying the fabric after the pretreatment step, applying the water-based ink composition to a region of the wet precoat layer,
wherein an amount of the pretreatment composition applied per unit area of the fabric is more than 0.035 g/$cm^2$ and less than 0.070 g/$cm^2$,

in the pretreatment composition, a content of the cationic polymer is more than 1.4 mass% and less than 10.5 mass% with respect to a total mass of the pretreatment composition, and a content of the crosslinking agent is 0.1 mass% or more and less than 2.7 mass% with respect to the total mass of the pretreatment composition, and the water-based ink composition contains water, a pigment, a resin emulsion, a water-soluble organic solvent, and a surfactant.

**27.** The inkjet textile printing method according to claim 26, wherein the resin emulsion contains at least one selected from the group consisting of a urethane resin, a styrene-butadiene resin, and an acrylic resin.

**28.** The inkjet textile printing method according to claim 26 or 27, wherein the water-based ink composition further contains a polymeric dispersant.

**29.** The inkjet textile printing method according to claim 28, wherein the polymeric dispersant is a polymer containing at least two constituent monomers selected from the group consisting of a monomer A, a monomer B, and a monomer C represented by the following formula (1):

[Chem. 2]

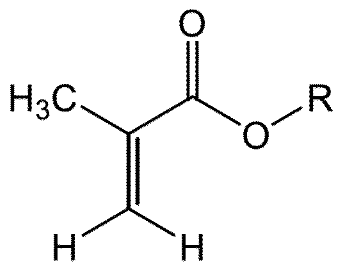

(1)

where the monomer A is a monomer in which R is a hydrogen atom in the formula (1), the monomer B is a monomer in which R is a C1-C4 alkyl group in the formula (1), and the monomer C is a monomer in which R is an aryl group or an aryl C1-C4 alkyl group in the formula (1).

**30.** The inkjet textile printing method according to any one of claims 26 to 29, wherein the pigment is a white pigment.

**31.** The inkjet textile printing method according to any one of claims 27 to 30, wherein the urethane resin includes at least one selected from the group consisting of a polyether-based urethane resin and a polycarbonate-based urethane resin.

**32.** The inkjet textile printing method according to any one of claims 26 to 31, wherein the cationic polymer is a polymer containing at least one structural unit selected from the group consisting of an allylamine structural unit, a diallylamine structural unit, a diallylammonium structural unit, and an epihalohydrin structural unit.

**33.** The inkjet textile printing method according to any one of claims 26 to 32, wherein the crosslinking agent includes one or more cationic crosslinking agents selected from the group consisting of a blocked isocyanate group-containing compound, a carbodiimide group-containing compound, and an oxazoline group-containing compound.

**34.** The inkjet textile printing method according to claim 33, wherein a dissociation temperature of the blocked isocyanate group-containing compound is 120°C or more.

**35.** The inkjet textile printing method according to any one of claims 26 to 34, wherein a surface tension of the pretreatment composition at 25°C is 35 mN/m to 60 mN/m.

**36.** The inkjet textile printing method according to any one of claims 26 to 35, wherein the fabric is polyester or a blend containing polyester.

**37.** The inkjet textile printing method according to claim 36, comprising
a step of drying, at 130°C or less, the fabric on which the image is formed, after the step of applying the water-based ink composition.

**38.** The inkjet textile printing method according to any one of claims 26 to 35, wherein the fabric is cotton or a blend containing cotton.

**39.** The inkjet textile printing method according to any one of claims 26 to 38, comprising
a pressure application step of applying pressure to a region where the wet precoat layer is formed, after the pre-treatment step.

**INTERNATIONAL SEARCH REPORT**

International application No. **PCT/JP2022/009567**

**A. CLASSIFICATION OF SUBJECT MATTER**

***B41J 2/01***(2006.01)i; ***C09D 11/54***(2014.01)i; ***B41M 5/00***(2006.01)i; ***D06P 5/00***(2006.01)i; ***D06P 5/30***(2006.01)i; ***D06P 3/52***(2006.01)i; ***D06P 3/60***(2006.01)i
FI: D06P5/00 104; D06P5/30; B41M5/00 114; B41M5/00 132; B41M5/00 120; B41J2/01 123; D06P3/52 Z; D06P3/60 Z; B41J2/01 501; B41J2/01 125; B41J2/01 121; C09D11/54; B41M5/00 100

According to International Patent Classification (IPC) or to both national classification and IPC

**B. FIELDS SEARCHED**

Minimum documentation searched (classification system followed by classification symbols)

B41J2/01; C09D11/54; B41M5/00; D06P5/00; D06P5/30; D06P3/52; D06P3/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-165417 A (SEIKO EPSON CORP) 25 October 2018 (2018-10-25) claims 1-2, 8, paragraphs [0050]-[0092], [0112]-[0116], [0133]-[0142], examples | 1-3, 5, 8-12, 14-16 |
| Y | | 4-5, 8-19 |
| A | | 6-7, 20-39 |
| X | JP 2019-194368 A (FUJIFILM CORP) 07 November 2019 (2019-11-07) claims 1, 4-6, 8, 18, paragraphs [0035]-[0052], [0153], [0168], [0171], [0184], table 1 | 1-3 |
| Y | | 4-5, 8-19 |
| Y | JP 2009-30014 A (RISO KAGAKU CORP) 12 February 2009 (2009-02-12) claims 1-5, 8, 10, paragraphs [0044], [0048], examples | 4-5, 8-19 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/009567**

| Patent document cited in search report | Publication date (day/month/year) | Patent family member(s) | Publication date (day/month/year) |
|---|---|---|---|
| JP 2018-165417 A | 25 October 2018 | US 2018/0282567 A1<br>claims 1-2, 13, paragraphs [0050]-[0092], [0112]-[0116], [0133]-[0142], examples<br>EP 3382093 A1<br>CN 108660762 A | |
| JP 2019-194368 A | 07 November 2019 | WO 2018/043414 A1 | |
| JP 2009-30014 A | 12 February 2009 | US 2010/0091052 A1<br>claims 1-4, 8, 10-12, paragraphs [0069], [0075], examples<br>WO 2009/001589 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07119047 A
- JP 2000226781 A